# EUROPEAN PATENT APPLICATION

(11) **EP 1 612 651 A1**
(43) Date of publication of application: **04.01.2006**
(21) Application number: 04725996.5
(22) Date of filing: 06.04.2004
(51) Int. Cl.: G06F 3/00

(54) **SYSTEM AND METHOD FOR OUTPUTTING IMAGES**

(30) Priority: 07.04.2003 JP 2003103275; 02.04.2004 JP 2004110230
(71) Applicant: CANON KABUSHIKI KAISHA, Ohta-ku Tokyo 146-8501 (JP)
(72) Inventor: YAMADA, Akitoshi, CANON KABUSHIKI KAISHA, Ohta-ku, Tokyo 1468501 (JP); HIRABAYASHI, Hiromitsu, CANON KABUSHIKI KAISHA, Ohta-ku, Tokyo 1468501 (JP); AICHI, Takao, CANON KABUSHIKI KAISHA, Ohta-ku, Tokyo 1468501 (JP); YANO, Kentaro, CANON KABUSHIKI KAISHA, Ohta-ku, Tokyo 1468501 (JP); MASUMOTO, Kazuyuki, CANON KABUSHIKI KAISHA, Ohta-ku, Tokyo 1468501 (JP); GOTO, Fumihiro, CANON KABUSHIKI KAISHA, Ohta-ku, Tokyo 1468501 (JP); MIKAMI, Ruriko, CANON KABUSHIKI KAISHA, Ohta-ku, Tokyo 1468501 (JP)
(74) Representative: Beresford, Keith Denis Lewis
(86) International application number: PCT/JP2004/004937
(87) International publication number: WO 2004/090711

(57) **Abstract**

An image output system connects at least three devices as a server and client via a versatile interface, and outputs an image by transferring data among these devices. In this system, a DSC serves as a client of a storage device and printer. The DSC transmits a list request of image files stored in the storage device to the storage device, which transmits list data of the image files to the DSC together with an identification ID of the list request in response to the list request. When the DSC sends a print instruction to the printer, the printer transmits a request of image data of an image designated by the print instruction to the storage device together with the identification ID, acquires image data from the storage device as the client, and outputs an image.

## Description

### TECHNICAL FIELD

The present invention relates to an image output system which connects at least three devices as a server and client via a USB interface and outputs an image. In this specification, a digital camera will be abbreviated as DSC (Digital Still Camera). However, the DSC does not mean that the present invention is limited to still image photographing, and the following description will be given under the condition that the digital camera (DSC) includes a camera such as a digital video camera that can capture a moving image.

### BACKGROUND ART

Normally, upon printing an image sensed by a digital camera, the following processes are required. That is, an image stored in the digital camera is read by a personal computer (to be referred to as a PC hereinafter), and is printed by a printer connected to the PC using an application running on the PC. That is, the flow of image data is DSC → PC → printer, and intervention of the PC is indispensable. Also, the PC must be always activated to print an image stored in a DSC.

In consideration of such situation, a printer apparatus which can print an image sensed by a digital camera by directly connecting a DSC and the printer, and issuing (to be referred to as photo direct print hereinafter) a print instruction on a display normally equipped on the DSC is already commercially available.

Most of recent DSCs comprise versatile communication means used to connect a PC. Typically, a DSC comprises a USB (Universal Serial Bus) as this communication means. Upon connection using this USB, a communication is established while defining the DSC as a slave and the PC as a host. In order to issue a print instruction from the DSC via the USB, the DSC and printer are directly connected.

By contrast, demand has arisen for connecting a storage device such as a DVD or the like to read and store a large number of image data from the DSC, or for connecting a display such as a television receiver or the like so as to observe images sensed by the DSC on a larger screen.

However, in a connection pattern like DSC - printer - DVD via the aforementioned USB, one host is present in each network topology, a host device (e.g., a printer) makes communication control in that topology, and a communication between different topologies cannot be made. Therefore, when connection is made like DSC - printer - DVD, and the DSC serves as a host of the DVD, two network topologies, i.e., DSC - DVD and printer - DSC are formed and, for example, image data stored in the DVD cannot be printed by the printer apparatus in accordance with an instruction from the DSC.

### DISCLOSURE OF INVENTION

The present invention has been made in consideration of the above problems, and has as its object to propose novel data exchange among a plurality of devices connected via the USB.

According to one aspect of the present invention, an image transfer system according to the present invention has the following arrangement.

That is, there is provided an image transfer system which connects at least three devices as a server and client via a versatile interface, and outputs an image by transferring data among the devices, characterized in that
a first device serves as a client of second and third devices, and transmits a list request of image files stored in the second device to the second device,
the second device transmits list data of the image files to the first device together with an identification ID of the list request in response to the list request, and
the third device sends a request of image data of an image to be output which is designated by the first device, to the second device together with the identification ID, and acquires the image data from the second device.

According to one aspect of the present invention, an image transfer method according to the present invention has the following steps.

That is, there is provided an image transfer method which connects at least three devices as a server and client via a versatile interface, and outputs an image by transferring data among the devices, characterized by comprising:
a step of transmitting, from a first device, a list request of image files stored in a second device to the second device, the first device serving as a client of the second device and a third device;
a step of transmitting, from the second device, list data of the image files to the first device together with an identification ID of the list request in response to the list request; and
a step of transmitting, from the third device, a request of image data of an image to be output which is designated by the first device, to the second device together with the identification ID, and acquiring the image data from the second device.

According to one aspect of the present invention, a printing apparatus according to the present invention has the following arrangement.

That is, there is provided a printing device which is connected to an image sensing device and storage device via a versatile interface, and prints an image in response to a print instruction from the image sensing device, characterized by comprising:
reception means for receiving list data of image files as a print request from the image sensing device;
request means for transmitting the list data of the image file to the storage device to request the storage device to send image data; and
print means for printing an image on the basis of the image data transmitted from the storage device in response to the request from the request means.

According to one aspect of the present invention, an image sensing apparatus according to the present invention has the following arrangement.

That is, there is provided an image sensing device which is connected to a printing device and storage device via a versatile interface, and outputs a print instruction to the printing device to make the printing device print an image, characterized by comprising:
request means for transmitting a request of list data of image files to the storage device;
selection instruction means for prompting a user to select an image to be printed on the basis of the list data transmitted from the storage device in response to the request of the request means; and
print request means for transmitting a print request of the image selected by the selection instruction means to the printing device.

According to one aspect of the present invention, a communication apparatus according to the present invention has the following arrangement.

That is, there is provided a communication device which communicates with at least one device via a versatile interface, characterized by comprising:
list request reception means for receiving a list request that requests a list of files stored in an externally connected or internal storage device from a first device;
file transmission request reception means for transmitting the list data and an identification ID of the list data to the first device in response to the list request, and receiving a file transmission request appended with the identification ID from a second device; and
transmission means for transmitting a file specified based on the identification ID appended to the file transmission request from the storage device to the second device.

Other features and advantages of the present invention will be apparent from the following description taken in conjunction with the accompanying drawings.

### BRIEF DESCRIPTION OF DRAWINGS

The accompanying drawings, which are incorporated in and constitute a part of the specification, illustrate embodiments of the invention and, together with the description, serve to explain the principles of the invention.
Fig. 1 depicts a schematic perspective view of a PD printer apparatus according to an embodiment of the present invention;
Fig. 2 depicts a schematic view of a control panel of the PD printer apparatus according to the embodiment of the present invention;
Fig. 3 is a block diagram showing the arrangement of principal part associated with control of the PD printer apparatus according to the embodiment of the present invention;
Fig. 4 is a block diagram showing the arrangement of an ASIC of the PD printer apparatus according to the embodiment of the present invention;
Fig. 5 is a block diagram for explaining the basic arrangement of a DSC according to the embodiment of the present invention;
Fig. 6 is a block diagram for explaining the basic arrangement of a storage device according to the embodiment of the present invention;
Fig. 7 depicts a view for explaining the software configurations of a PD printer apparatus and DSC according to the embodiment of the present invention;
Fig. 8 depicts a view showing an example wherein the PD printer apparatus, DSC, and storage device according to the first embodiment of the present invention are connected via USB interfaces;
Figs. 9A and 9B depict views for explaining an example wherein the DSC and storage device are connected to the PD printer apparatus according to the first embodiment via USB interfaces;
Figs. 10A and 10B depict views for explaining an example wherein the PD printer apparatus and DSC are connected to the storage device according to the first embodiment via USB interfaces;
Fig. 11 is a flowchart for explaining the operations of the PD printer apparatus, storage device, and DSC in the connection example shown in Fig. 8;
Fig. 12 depicts a view for explaining the relationship among the camera ID, request ID, and image data name managed by the storage device;
Fig. 13 is a flowchart for explaining the operations of the PD printer apparatus, storage device, and DSC in the connection example shown in Figs. 10A and 10B;
Fig. 14 is a flowchart for explaining the operations of the PD printer apparatus, storage device, and DSC in the connection example shown in Fig. 9A;
Fig. 15 depicts a view showing an example wherein the PD printer apparatus, DSC, and storage device according to the second embodiment of the present invention are connected via USB interfaces;
Fig. 16 is a block diagram for explaining the arrangement of a display according to the second embodiment;
Figs. 17A and 17B depict views for explaining an example wherein the DSC and display are connected to the PD printer apparatus according to the second embodiment via USB interfaces;
Figs. 18A and 18B depict views for explaining an example wherein the PD printer apparatus and DSC are connected to the display according to the second embodiment via USB interfaces;
Fig. 19 depicts a view for explaining exchange of commands among the DSC, PD printer apparatus, and storage device in the pattern shown in Fig. 8;
Fig. 20 depicts a view for explaining exchange of commands among the DSC, PD printer apparatus, and storage device in the pattern shown in Figs. 9A and 9B; and
Fig. 21 depicts a view for explaining exchange of commands among the DSC, PD printer apparatus, and storage device in the pattern shown in Figs. 10A and 10B.

### BEST MODE FOR CARRYING OUT THE INVENTION

Preferred embodiments of the present invention will be described in detail hereinafter with reference to the accompanying drawings.

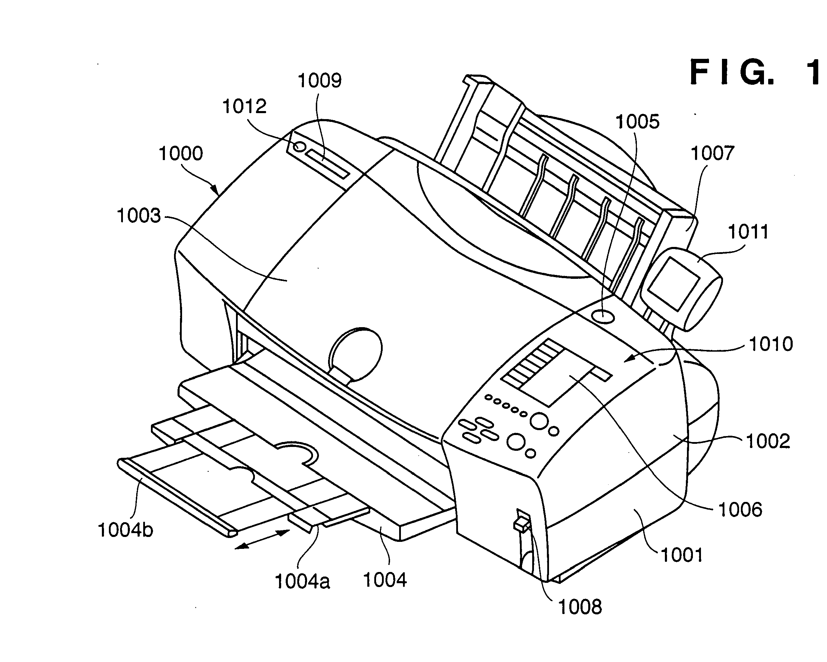

Fig. 1 depicts a schematic perspective view of a photo direct printer apparatus (to be referred to as a PD printer apparatus hereinafter) 1000 according to an embodiment of the present invention. This PD printer apparatus 1000 has a function of printing data received from a host computer (PC) as a normal PC printer, and a function of printing image data directly read from a storage medium such as a memory card or the like or printing image data received from a digital camera.

Referring to Fig. 1, a main body which forms a housing of the PD printer apparatus 1000 according to this embodiment has a case M 1001, upper case 1002, access cover 1003, and exhaust tray 1004 as an exterior member. The lower case 1001 nearly forms the lower half portion of the main body, and the upper case 1002 nearly forms the upper half portion of the main body. By combining these cases, a hollow structure which has a storage space that stores mechanisms to be described later is formed. Openings are respectively formed on the upper and front surfaces of the main body. One end portion of the exhaust tray 1004 is rotatably held by the lower case 1001, and rotation of the tray 1004 opens/closes the opening formed on the front surface of the lower case 1001. For this reason, upon making the printer apparatus 1000 execute a print process, the exhaust tray 1004 rotates toward the front surface side to open the opening, so that print sheets can be exhausted from the opening. The exhausted print sheets are stacked on the exhaust trays 1004 in turn. The exhaust tray 1004 stores two auxiliary trays 1004a and 1004b, and when these auxiliary trays are pulled out as needed, the support area of print sheets can be enlarged/reduced in three steps.

One end portion of the access cover 1003 is rotatably held by the upper case 1002 to be able to open/close the opening formed on the upper surface of the main body. When the access cover 1003 is opened, a printhead cartridge (not shown), ink tanks (not shown), or the like housed in the main body can be exchanged. Although not shown, when the access cover 1003 is opened/closed, a projection formed on the rear surface of the cover 1003 rotates a cover open/close lever. By detecting the rotation position of that lever using a microswitch or the like, the open/close state of the access cover 1003 is detected.

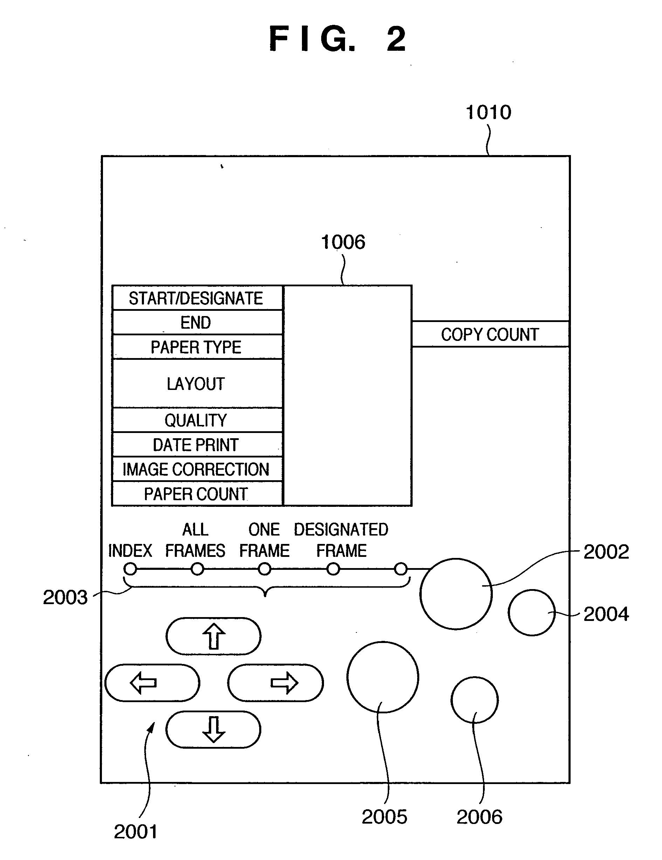

A power key 1005 is arranged on the upper surface of the upper case 1003 so as to be able to be pressed. A control panel 1010 which comprises a liquid crystal display 1006, various key switches, and the like is provided on the right side of the upper case 1002. The structure of the control panel 1010 will be described in detail later with reference to Fig. 2. Reference numeral 1007 denotes an automatic feeder which automatically conveys a print sheet into the apparatus main body. Reference numeral 1008 denotes a paper gap select lever which is used to adjust the gap between the printhead and print sheet. Reference numeral 1009 denotes a card slot which receives an adapter that can receive a memory card. Via this adapter, image data stored in the memory card can be directly fetched and printed. As this memory card (PC), for example, a compact flash card® memory card, smart media card, memory stick, and the like are available. Reference numeral 1011 denotes a viewer (liquid crystal display unit) which is detachable from the main body of this PD printer apparatus 1000, and is used to display an image for one frame, index images, and the like upon, e.g., searching images stored in the PC card for an image to be printed. Reference numeral 1012 denotes a USB terminal used to connect a digital camera (to be described later). Also, another USB connector used to connect a personal computer (PC) is provided on the rear surface of this PD printer apparatus 1000.

Fig. 2 depicts a schematic view of the control panel 1010 of the PD printer apparatus 1000 according to this embodiment.

Referring to Fig. 2, the liquid crystal display unit 1006 displays menu items used to set data associated with item names printed on the right and left sides of the unit 1006. The items displayed on this unit include, e.g., the first photo number or designated frame number of the range to be printed (start frame designation/print frame designation), the last photo number of the range to be printed (end), the number of copies to be printed (copy count), the type of paper sheet (print sheet) used in a print process (paper type), the setup of the number of photos to be printed per print sheet (layout), designation of print quality (quality), designation as to whether or not to print a photographing date (date print), designation as to whether or not to print a photo after correction (image correction), display of the number of print sheets required for the print process (print sheet count), and the like. These items are selected or designated using cursor keys 2001. Reference numeral 2002 denotes a mode key. Every time this key is pressed, the type of print (index print, all-frame print, one-frame print, and the like) can be switched, and a corresponding one of LEDs 2003 is turned on in accordance with the selected type of print. Reference numeral 2004 denotes a maintenance key which is used to do maintenance of the printer (e.g., cleaning of the printhead, and the like). Reference numeral 2005 denotes a print start key which is pressed when the start of a print process is instructed or when the maintenance setup is settled. Reference numeral 2006 denotes a print cancel key which is pressed when a print process or maintenance is canceled.

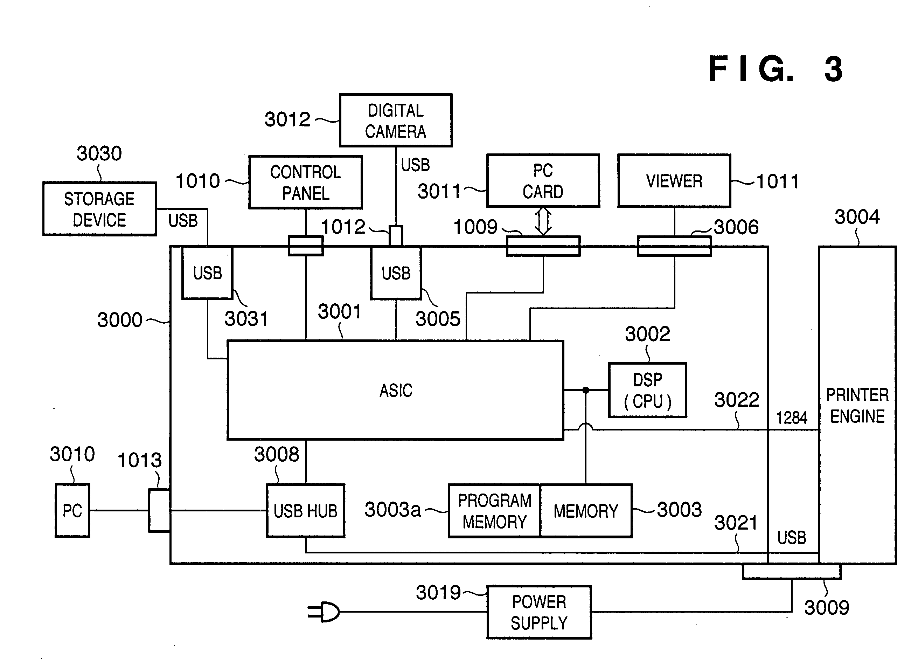

The arrangement of principal part associated with the control of the PD printer apparatus 1000 of this embodiment will be described below with reference to Fig. 3. Note that the same reference numerals in Fig. 3 denote parts common to those in the above-mentioned drawings, and a description thereof will be omitted.

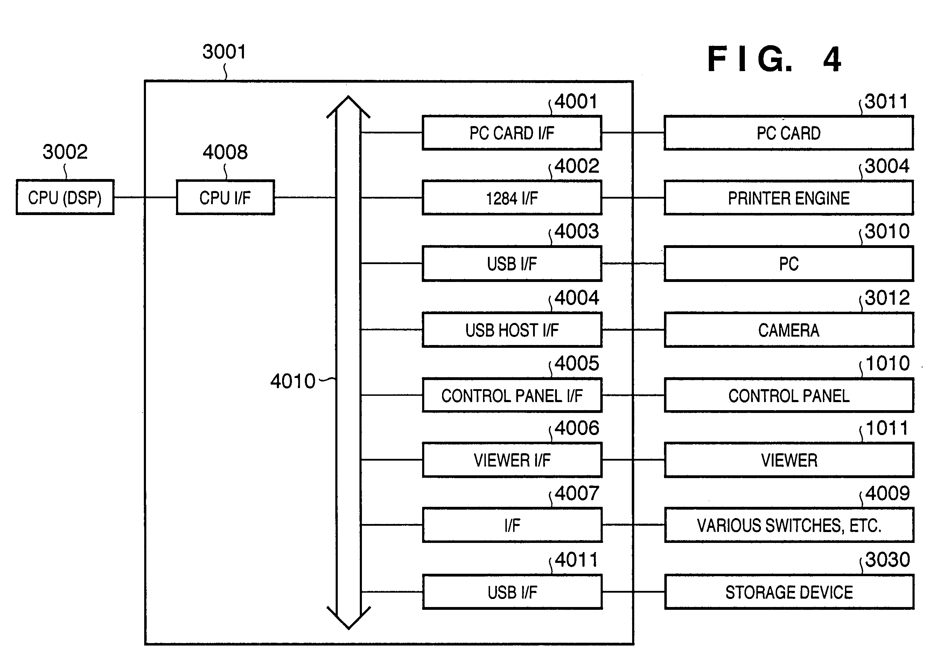

Referring to Fig. 3, reference numeral 3000 denotes a controller (control board). Reference numeral 3001 denotes an ASIC (dedicated custom LSI). The arrangement of the ASIC 3001 will be described later with reference to the block diagram of Fig. 4. Reference numeral 3002 denotes a DSP (digital signal processor), which includes a CPU and executes various kinds of control to be described later, and image processes such as conversion from a luminance signal (RGB) into a density signal (CMYK), scaling, gamma conversion, error diffusion, and the like. Reference numeral 3003 denotes a memory, which has a memory area that serves as a program memory 3003a for storing a control program to be executed by the CPU of the DSP 3002, a RAM area for storing a running program, and a work area for storing image data and the like. Reference numeral 3004 denotes a printer engine. In this embodiment, the printer is equipped with a printer engine of an ink-jet printer which prints a color image using a plurality of color inks. Reference numeral 3005 denotes a USB connector as a port for connecting a digital camera (DSC) 3012. Reference numeral 3006 denotes a connector for connecting the viewer 1011. Reference numeral 3008 denotes a USB hub (USB HUB). When the PD printer apparatus 1000 executes a print process based on image data from a PC 3010, the USB hub 3008 passes data received from the PC 3010, and outputs the data to the printer engine 3004 via a USB 3021. In this way, the PC 3010 connected to the printer apparatus can execute a print process by directly exchanging data, signals, and the like with the printer engine 3004 (the printer apparatus serves as a normal PC printer). Reference numeral 3009 denotes a power supply connector, which inputs a DC voltage which is converted from commercial AC power by a power supply 3019. The PC 3010 is a general personal computer. Reference numeral 3011 denotes a memory card (PC card) mentioned above; and 3012, a digital camera (DSC: Digital Still Camera). Reference numeral 3030 denotes a storage device such as a hard disk, DVD drive, or the like, which stores image data. This storage device 3030 is connected by USB via a USB connector 3031.

Note that signals are exchanged between this controller 3000 and printer engine 3004 via the USB 3021 or an IEEE1284 bus 3022.

Fig. 4 is a block diagram showing the arrangement of the ASIC 3001. In Fig. 4 as well, the same reference numerals denote parts common to those in the above drawings, and a description thereof will be omitted.

Reference numeral 4001 denotes a PC card interface, which is used to read image data stored in the inserted PC card 3011, and to write data in the PC card 3011. Reference numeral 4002 denotes an IEEE1284 interface, which is used to exchange data with the printer engine 3004. This IEEE1284 interface 4002 is a bus used when image data stored in the digital camera 3012 or PC card 3011 is to be printed. Reference numeral 4003 denotes a USB interface, which exchanges data with the PC 3010. Reference numeral 4004 denotes a USB host interface, which exchanges data with the digital camera 3012. Reference numeral 4005 denotes a control panel interface, which receives various operation signals from the control panel 1010, and outputs display data to the display unit 1006. Reference numeral 4006 denotes a viewer interface, which controls display of image data on the viewer 1011. Reference numeral 4007 denotes an interface, which controls interfaces with various switches, LEDs 4009, and the like. Reference numeral 4008 denotes a CPU interface, which controls exchange of data with the DSP (CPU) 3002. Reference numeral 4010 denotes an internal bus (ASIC bus), which interconnects these interfaces. Reference numeral 4011 denotes a USB interface, which exchanges data with the storage device 3030.

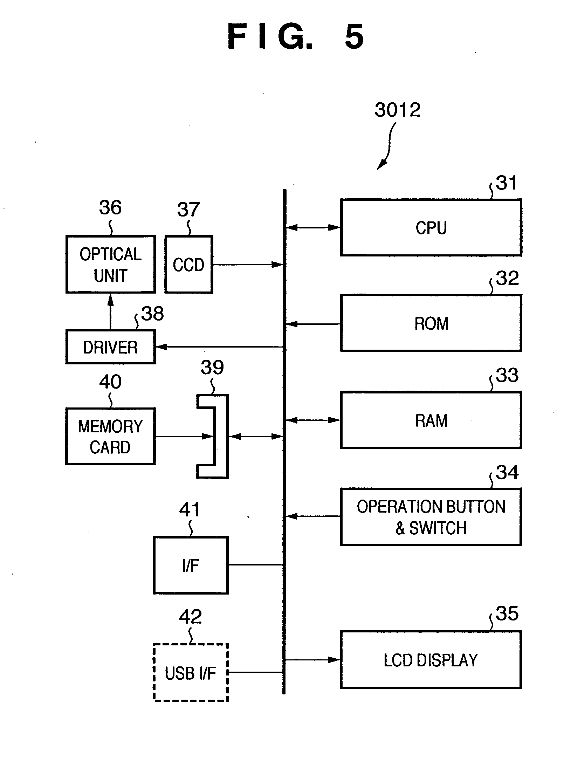

Fig. 5 is a block diagram of the DSC 3012 according to this embodiment. Note that the hardware itself will be briefly described since it is known to those who are skilled in the art (firmware is compatible to DPS (Direct Print System)).

Referring to Fig. 5, reference numeral 31 denotes a CPU which controls the overall DSC 3012; and numeral 32 denotes a ROM that stores the processing sequence (firmware) of the CPU 31 (note that the ROM comprises a rewritable nonvolatile memory (e.g., a flash memory) since the firmware version is updated as needed). Reference numeral 33 denotes a RAM which is used as a work area of the CPU 31; and numeral 34 denotes a switch group used to make various operations.
Reference numeral 35 denotes a liquid crystal display, which is used to confirm a sensed image, and to display a menu upon making various setups. In this embodiment, these components 34 and 35 serve as a user interface of the whole system when the DSC serves as a member of the direct print system. Reference numeral 36 denotes an optical unit which mainly comprises a lens and its drive system. Reference numeral 37 denotes a CCD element; and numeral 38 denotes a driver which controls the optical unit 36 under the control of the CPU 31. Reference numeral 39 denotes a connector that receives a storage medium 40 (compact flash® memory card, smart media card, or the like); and numeral 41 denotes a USB interface (the slave side of the USB) used to connect the PC or PD printer 1000 of this embodiment. As will be described later, a USB interface 42 may be equipped, and the DSC may be directly connected to the storage device 3030 or a display (television receiver; to be described later) via this USB interface.

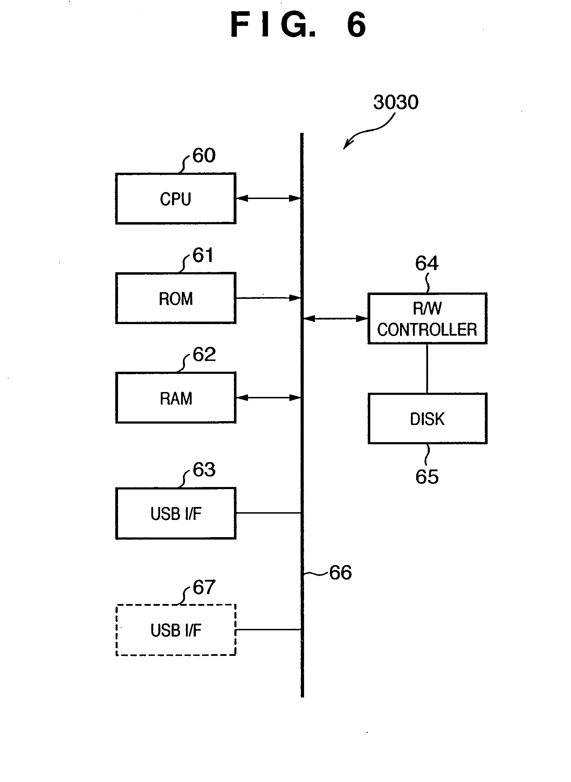

Fig. 6 is a block diagram for explaining the arrangement of the storage device 3030 which is connected to this PD printer 1000 via the USB in the same manner as the DSC 3012.

Referring to Fig. 6, reference numeral 60 denotes a CPU which controls the overall storage device 3030; and numeral 61 denotes a ROM that stores the processing sequence (firmware) of the CPU 60 (note that the ROM comprises a rewritable nonvolatile memory (e.g., a flash memory) since the firmware version is updated as needed). Reference numeral 62 denotes a RAM which is used as a work area of the CPU 60. Reference numeral 63 denotes a USB interface (the slave side of the USB) used to connect the PD printer 1000 according to this embodiment. As will be described later, a USB interface 67 may be equipped, and the storage device may be directly connected to the DSC 3012 or display via this USB interface. Reference numeral 65 denotes a disk serving as a storage medium in this storage device 3030; and numeral 64 denotes an R/W controller, which controls data write in this disk 65, and data read from the disk 65.

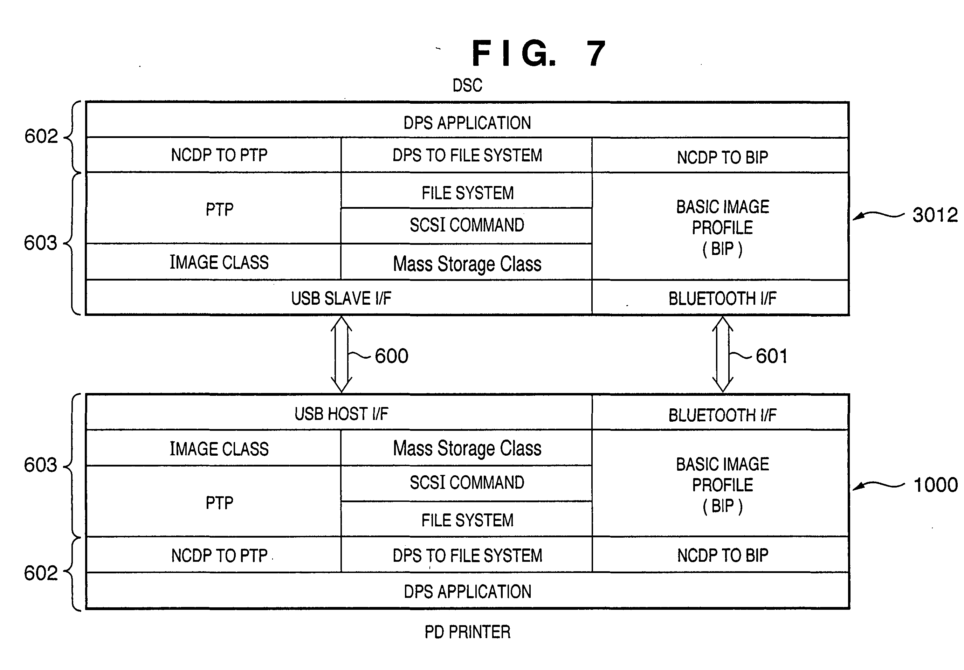

Fig. 7 depicts a view for explaining the interface between the PD printer 1000 and DSC 3012 according to this embodiment. Note that the interface between this PD printer 1000 and storage device 3030 has basically the same hierarchical structure.

Referring to Fig. 7, reference numeral 600 denotes a USB interface; and numeral 601 denotes a Bluetooth interface. Reference numeral 602 denotes an application layer which is built in upon forming a system based on DPS. Reference numeral 603 denotes a layer that implements existing protocols and interfaces. In Fig. 6, PTP (Picture Transfer Protocol), SCSI, BIP (Basic Image Profile) of Bluetooth, USB interface, and the like are installed. The DPS according to this embodiment is premised on installation as an application on the architecture of the above protocol layer. In this case, the PD printer apparatus 1000 is specified as a USB host, the camera 3012 (storage device 3030) is specified as a USB device, and they have the same DPS configurations, as shown in Fig. 7 (note that Fig. 7 does not illustrate the configuration of the storage device 3030).

A merit of use of the DPS according to this embodiment lies in that when the PD printer apparatus 1000 and DSC 3012 exchange information with each other at the time of and after making transition to DPS, a file (text file) which describes a series of pieces of information and a series of operation procedures as a script is generated, that file is sent to a partner device, and the receiving side interprets the received script to execute processes. As a result, when arbitrary information is to be sent to the partner side, if that information is formed of a plurality of elements, exchange of individual elements by handshake can be reduced. The overhead upon information transfer can be reduced, thus improving the information transfer efficiency. For example, assume that there are a plurality of images to be printed on the DSC 3012 side. In such case, if the user selects images to be printed as much as he or she wants, and sets print conditions for these images, a series of print procedures are described as a script, and that script can be sent to the PD printer apparatus 1000. The PD printer apparatus 1000 side interprets and process the received script.

### [First Embodiment]

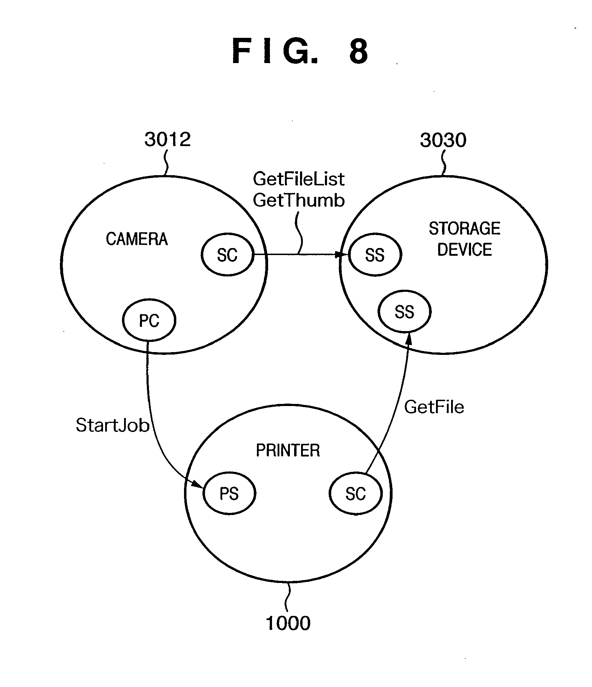

Fig. 8 shows an example wherein the PD printer 1000, DSC 3012, and storage device 3030 are connected via the USB interfaces in the first embodiment of the present invention. In the example of Fig. 8, the PD printer 1000, DSC 3012, and storage device 3030 are connected to each other using two USB interfaces per device. In Fig. 8, "PS" indicates a print server; "PC", a print client; "SC", a storage client; and "SS", a storage server. The example of Fig. 8 shows a case wherein the user operates the DSC 3012 to designate image data stored in the storage device 3030, and makes the PD printer 1000 print the designated image data. The storage device 3030 may be independent from the PD printer 1000 or may be built in the PD printer 1000.

The operations of the client and server when PTP is used as a communication protocol in this embodiment will be explained using Figs. 3, 5, 6, and 8.

"PS" and SC" handled by the PD printer 1000 in Fig. 8 are implemented when the DSP (CPU) 3002 in Fig. 3 reads out "PS" and "SC" operation programs stored in the program memory 3003a, and executes them for respective steps. The "PS" operation program receives and interprets a print request script or the like from "PC" handled by the digital camera 3012 via the USB 3005 and ASIC 3001, and controls the printer engine 3004 via the ASIC 3001 to print according to the print request. The "SC" operation program generates a file request script or the like that describes an acquisition request of files required in a print process, and issues it to "SS" handled by the storage device 3030 via the ASIC 3001 and USB I/F 3031, thus acquiring required files and the like.

"PC" and "SC" handled by the DSC 3012 in Fig. 8 are implemented when the CPU 31 in Fig. 5 reads out "PC" and "SC" operation programs stored in the ROM 302 and executes them for respective steps. The "PC" operation program generates a print request script or the like, and issues it to "PS" handled by the PD printer 1000 via the I/F 41. The "SC" operation program generates a file request script or the like that describes an acquisition request of files required to browse photo images, and issues it to "SS" handled by the storage device 3030 via the USB I/F 42, thus acquiring required files.

"SS" handled by the storage device 3030 in Fig. 8 is implemented when the CPU 60 in Fig. 6 reads out an "SS" operation program stored in the ROM 61 and executes it for respective steps. The "SS" operation program receives and interprets a file acquisition request script or the like from "SC" handled by the PD printer 1000 via the USB I/F 63, and transmits image files and the like stored in the disk 65 via the R/W controller 64 to "SC" handled by the PD printer 1000 via the USB I/F 63 in accordance with the request. Also, the "SS" operation program receives and interprets a file acquisition request script or the like from "SC" handled by the DSC 3012 via the USB I/F 67, and transmits image files and the like stored in the disk 65 via the R/W controller 64 to "SC" handled by the DSC 3012 via the USB I/F 63 in accordance with the request.

The respective programs need not always be implemented by software, and some or all of these programs may be implemented by hardware.

In this case, the DSC 3012 outputs "GetFileList" and "GetThumb" commands to the storage device 3030 to request a list of image files stored in the storage device 3030 and their thumbnail images. Note that this request includes the ID of the DSC 3012. In accordance with this request, the storage device 3030 sets this ID of the DSC 3012 and a request ID which specifies that request, and sends a list of image files stored in the disk 65 and their thumbnail images to the DSC 3012 together with the request ID. These thumbnail images are displayed on the display 35 of the DSC 3012 as index images. The user then can select an image to be printed using the UI of the DSC 3012. When the user selects an image to be printed and inputs a print start instruction, the DSC 3012 transmits a "StartJob" command that instructs print start to the PD printer 1000 together with a file ID that specifies the image to be printed, and the aforementioned request ID. In accordance with this request, the PD printer 1000 issues a "GetFile" command to the storage device 3030 on the basis of the file ID designated by that print instruction and the request ID so as to request that image data. In this manner, the storage device 3030 transmits the designated image data to the PD printer 1000, which prints that data.

Note that the aforementioned request ID is used to determine correspondence between the file list when the storage device 3030 responds to the DSC 3012 and the file ID of the file list upon reception of an image data request from the PD printer 1000.

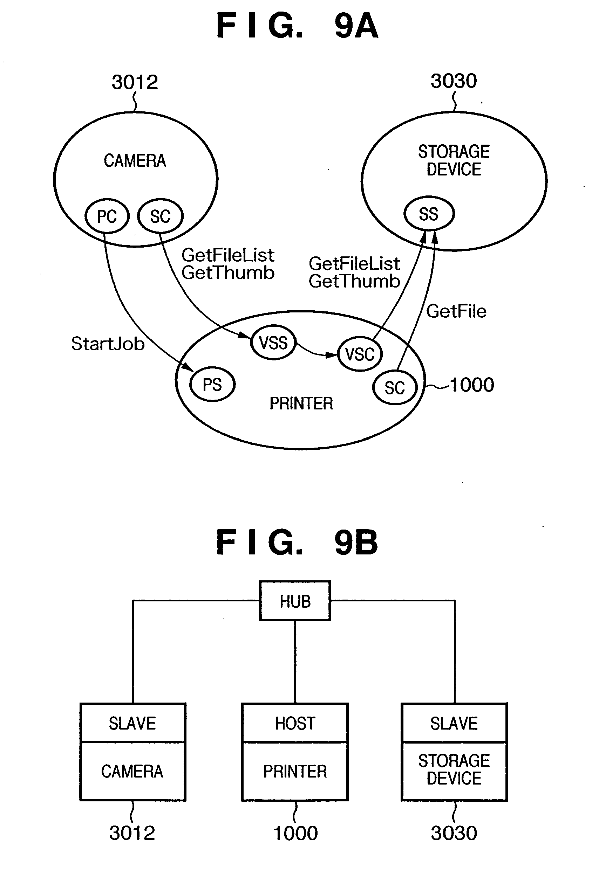

Fig. 9A shows another example when the PD printer 1000, DSC 3012, and storage device 3030 are connected via the USB interfaces in the first embodiment. In the example of Figs. 9A and 9B, the PD printer 1000 serves as a USB host, and the DSC 3012 and storage device 3030 are connected to the printer via a USB hub (Fig. 9B). In Fig. 9A, "PS" indicates a print server; "PC", a print client; "SC", a storage client; "SS", a storage server; "VSS", a virtual storage server; and "VSC", a virtual storage client. The example of Fig. 9A shows a case wherein the user operates the DSC 3012 to designate image data stored in the storage device 3030, and makes the PD printer 1000 print that image data.

"PS" and "SC" handled by the PD printer 1000 in Fig. 9A have the same contents as those described in Fig. 8, and a description thereof will be omitted. "VSS" and "VSC" are implemented when the DSP (CPU) 3002 in Fig. 3 reads out "VSS" and "VSC" operation programs stored in the program memory 3003a and executes them for respective steps. The "VSS" operation program behaves like a proxy of "SS" handled by the storage device 3030, and the "VSC" operation program behaves like a proxy of "SC" handled by the DSC 3012. "VSS" receives and interprets a file acquisition request script or the like from "SC" handled by the digital camera 3012 via the USB 3005 and ASiC 3001. "VSS" then sends the interpreted contents to "VSC". "VSC" generates a file request script or the like that describes a file acquisition request on the basis of the interpreted contents, issues it to "SS" handled by the storage device 3030 via the USB I/F 3031 to acquire required files and the like, and stores them in the memory 3003. "VSC" notifies "VSS" of the fact of acquisition of required files and the like, and storage position information of the files and the like in the memory 3003. "VSS" sends the acquired files and the like to "SC" handled by the DSC 3012 via the ASIC 3001 and USB 3005 on the basis of the received storage position information. As can be seen from the above description, since the exchange processes between "VSS" and "VSC" are purely internal processes in the PD printer 1000, they need not be independently present in practice, and may be implemented as an integrated program.

"PC" handled by the DSC 3012 in Fig. 9A has the same contents as that described in Fig. 8, and a description thereof will be omitted. "SC" is implemented when the CPU 31 in Fig. 5 reads out an "SC" operation program stored in the ROM 32 and executes it for respective steps. The "SC" operation program generates a file request script or the like that describes an acquisition request of files required to browse photo images, and issues it to "VSS" handled by the PD printer 1000 via the I/F 41, thus acquiring required files.

"SS" handled by the storage device 3030 in Fig. 9A is implemented when the CPU 60 in Fig. 6 reads out an "SS" operation program stored in the ROM 61 and executes it for respective steps. The "SS" operation program receives and interprets a file acquisition request script or the like from "VSC" handled by the PD printer 1000 via the USB I/F 63, and transmits image files and the like stored in the disk 65 via the R/W controller 64 to "VSC" handled by the PD printer 1000 via the USB I/F 63 in accordance with the request.

The respective functions implemented by the above programs need not always be implemented by software, and some or all of these functions may be implemented by hardware.

Although not specified in the description of the programs, "VSS" and "VSC" can enjoy the following merits by declaring themselves "proxies".
- "VSS" notifies client "SC" of its name and the name of "SS" as a proxy target, and "VSC" notifies client "SS" of its name and the name of "SS" as a proxy target, thus implementing a storage service which cannot be interpreted by "VSS" but can be interpreted only between "SC" - "SS".
- When the buffer memory size which can be used by the device that handles "VSS" and "VSC" is smaller than that which can be used by the device that handles "SC" and "SS", a maximum size of a file to be exchanged upon "SC" - "VSS" - "VSC" - "SS" proxy-connection is set to be smaller than that of a file to be exchanged upon "SC" - "SS" direct connection, thus avoiding buffer overflow of the "VSS" - "VSC" device.

In this case, the DSC 3012 sends "GetFileList" and "GetThumb" commands to the PD printer 1000 together with the ID to request the PD printer 1000 to send a list of image files stored in the storage device 3030 and their thumbnail images. In this case, the PD printer 1000 serves as a virtual storage server. The PD printer 1000 then serves as a virtual storage client, and sends "GetFileList" and "GetThumb" commands to the storage device 3030 to request the storage device 3030 to send a list of image files stored in the disk 65 and their thumbnail images. When the image file list and thumbnail images are sent from the storage device 3030 to the PD printer 1000 together with the request ID in response to that request, the PD printer 1000 transmits this list and thumbnail images to the DSC 3012 together with the request ID. Then, the image file list and thumbnail images are displayed on the display 35 of the DSC 3012. The user can select an image to be printed using the UI of the DSC 3012. When the user selects an image to be printed, and inputs a print start instruction, the DSC 3012 transmits a file ID that specifies the image to be printed, the request ID, a "StartJob" command that instructs print start to the PD printer 1000. In accordance with this request, the PD printer 1000 issues a "GetFile" command to the storage device 3030 on the basis of the file ID designated by that print instruction and the request ID so as to request that image data. In this manner, the storage device 3030 transmits the designated image data to the PD printer 1000, which prints that data.

Fig. 9B is a diagram for explaining USB connection of the PD printer 1000, DSC 3012, and storage device 3030 shown in Fig. 9A. In Fig. 9B, the PD printer 1000 is set as a host, and the DSC 3012 and storage device 3030 are set as slaves.

As for USB connection of the PD printer 1000, DSC 3012, and storage device 3030 shown in Fig. 9A, the PD printer 1000 may serve as a host in USB connection between the DSC 3012 and PD printer 1000, and the storage device 3030 may serve as a USB host in USB connection between the PD printer 1000 and storage device 3030.

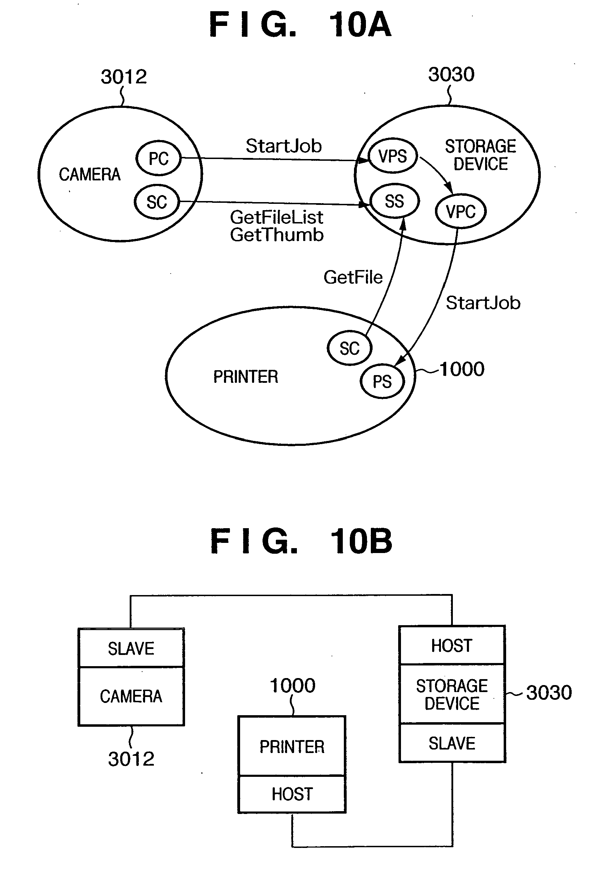

Fig. 10A shows still another example when the PD printer 1000, DSC 3012, and storage device 3030 are connected via the USB interfaces in the first embodiment. In Fig. 10A, the storage device 3030 serves as a host in USB connection between the DSC 3012 and storage device 3030, and the PD printer 1000 serves as a USB host in USB connection between the PD printer 1000 and storage device 3030, as shown in Fig. 10B. In Fig. 10A, "PS" indicates a print server; "PC", a print client; "SC", a storage client; "SS", a storage server; "VPS", a virtual print server; and "VPC", a virtual print client. The example of Fig. 10A shows a case wherein the user operates the DSC 3012 to designate image data stored in the storage device 3030, and makes the PD printer 1000 print the designated image data.

In this case, the DSC 3012 outputs the ID and "GetFileList" and "GetThumb" commands to the storage device 3030 to request a list of image files stored in the storage device 3030 and their thumbnail images. In response to this request, the image file list and thumbnail images are sent from the storage device 3030 to the DSC 3012 together with the request ID, and the user selects an image to be printed. When the user selects an image to be printed and inputs a print start instruction, the DSC 3012 transmits a file ID that specifies the image to be printed, the aforementioned request ID, and a "StartJob" command that instructs print start to the PD printer 1000. With this command, the storage device 3030 instructs the PD printer 1000 to print using the file ID which corresponds to the request ID and is designated by the print instruction ("StartJob"). As a result, the PD printer 1000 issues a "GetFile" command to the storage device 3030 on the basis of the file ID designated by that print instruction and the request ID so as to request that image data. In this manner, the storage device 3030 transmits the designated image data to the PD printer 1000, which prints that data. When the DSC 3012 requests the storage device 3030 to send the list of the stored image files and their thumbnail images first, the list and thumbnail images may be acquired together as in the above description. Alternatively, the DSC 3012 may output a "GetFileList" command to acquire the list alone, and may output a "GetThumb" command using the file ID described in the acquired list so as to acquire thumbnails of only required images in turn.

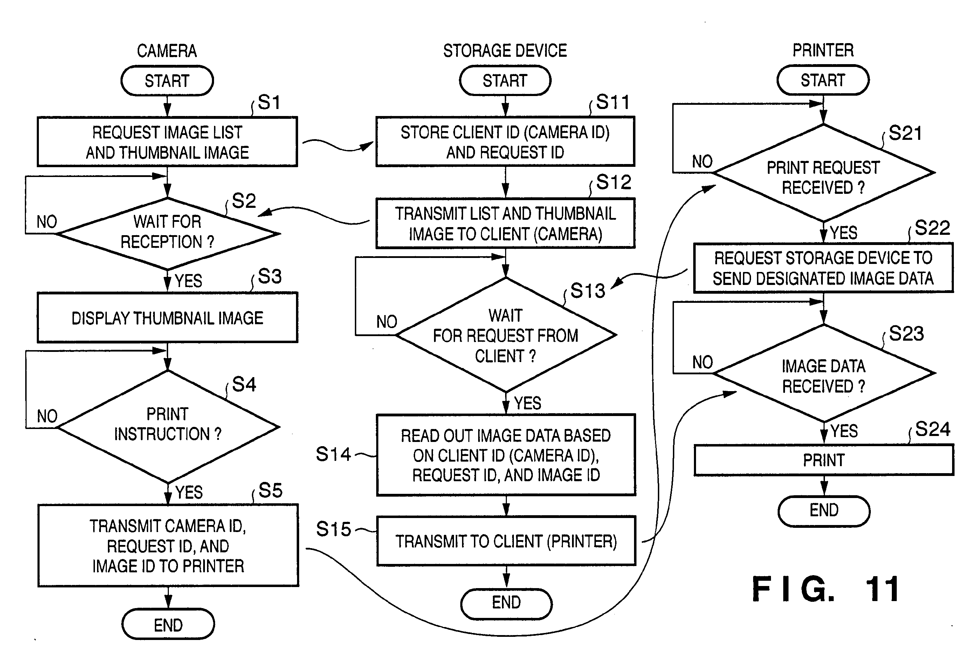

Fig. 11 is a flowchart for explaining the operations of the DSC 3012, PD printer 1000, and storage device 3030 in the arrangement shown in Fig. 8. Programs which are used to implement respective processes are respectively stored in the program memory 3003a in case of the PD printer 1000, the ROM 32 in case of the DSC 3012, and the ROM 61 in case of the storage device 3030.

When the user operates the DSC 3012 to input an index display instruction, the DSC 3012 outputs "GetFileList" and "GetThumb" commands to the storage device 3030 to request a list of image data stored in the storage device 3030 and their thumbnail images in step S1. In response to this request, the storage device 3030 stores the ID of the camera which outputs these commands and the request ID in the RAM 62 in step S11. Note that the camera ID is included in each command, and the request ID is uniquely assigned to a request based on that command. The flow advances to step S12, and the storage device 3030 transmits the file list and thumbnail images to the DSC 3012. The flow then advances from the response reception wait state in step S2 to step S3, and the DSC 3012 displays index images on the display 35 on the basis of the received thumbnail images. When the user selects an image to be printed by operating the operation buttons 34 while observing the index images, and inputs a print start instruction, the flow advances from step S4 to step S5, and a command "StartJob" is issued to transmit the camera ID, request ID, and selected file ID to the PD printer 1000.

The PD printer 1000 receives that print request in step S21, and the flow advances to step S22. In step S22, the PD printer 1000 requests the storage device 3030 to send image data corresponding to the request ID designated by "StartJob" and file ID ("GetFile"), and waits for reception of image data in step S23.

In response to this request, the flow advances from step S13 to step S14, and the storage device 3030 searches for image data requested by the printer 1000 on the basis of the camera ID, request ID, and file ID so as to read out that image data from the disk 65. The flow advances to step S15, and the storage device 3030 transmits the readout image data to the PD printer 1000.

The flow then advances from step S23 to step S24, and the PD printer 1000 receives and decodes that image data to render it to print data, thus executing a print process.

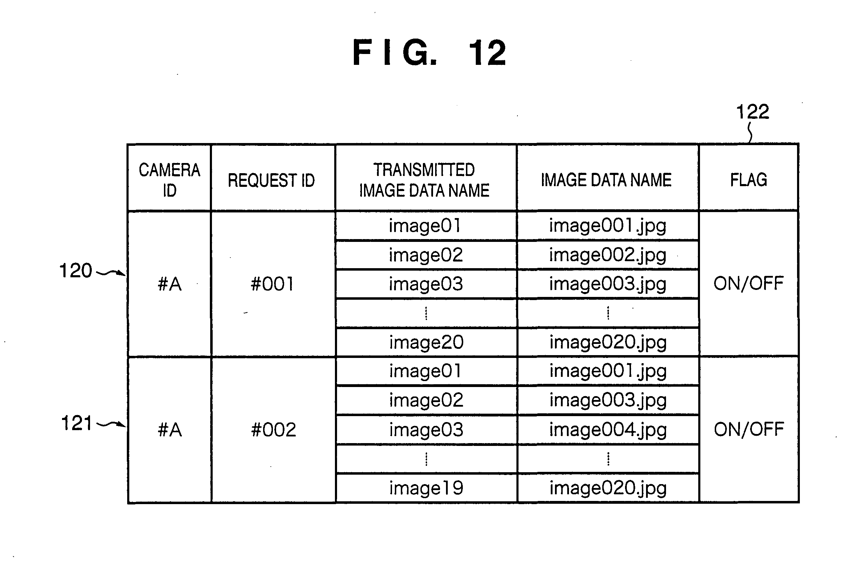

Fig. 12 depicts a table for explaining the relationship between the responding image data names, which are stored in the RAM 62 in correspondence with the camera IDs and request IDs in response to file list requests, and image data which are actually stored in the disk 66.

Even as a response to a "GetFileList" command from a single camera (DSC) (ID: #A), a list 120 of image data names shown is transmitted for the older request ID (#001). By contrast, if image data "image002.jpg" in the disk 65 has been deleted upon reception of a request from the identical camera several days later (ID: #002), an image list 121 includes transmitted file names which are different from image data names stored in the disk 65 after "image02" in the transmitted image data name field unlike in the list 120. Therefore, the storage device 3030 stores the list of transmitted image data names in correspondence with the camera ID that requests the file list and the request ID, and reads out corresponding image data from the disk 65 with reference to the image file list name corresponding to the camera ID and request ID. In this way, even when arbitrary image data has been deleted, as shown in Fig. 12, an image that the user does not want can be prevented from being erroneously printed. If a request from the DSC 3012 can be specified by only the request ID, the camera ID need not be used.

When the storage medium of the storage device 3030 is a removable card medium, image data names may be assigned to respective image files stored in that card medium at the time of inserting the card medium into the main body of the storage device 3030. In such case, after the user selects an image to be printed, if another card medium is inserted instead, the image to be printed may be changed to another image that the user does not want.

In Fig. 12, a flag 122 indicates whether or not image data is actually requested based on the file list after that file list is requested, and is set to be ON if the image data request is received. This is to prevent data of images transmitted as an image file list from being absent when image data stored in the disk 65 is deleted after the image file list is requested and before a print request based on the list is input. While this flag 122 is OFF, image data included in that list may be inhibited from being updated.

However, when the update process of image data is always or permanently inhibited once the image file list is transmitted, since the storage device 3030 cannot almost delete unnecessary images, update inhibition of image data is preferably released as soon as the update process need not be inhibited. Hence, it is effective if the storage device 3030 can determine whether the DSC 3012 requests to acquire a file list so as to merely browse images or to issue a print request to the PD printer 1000. This is because when the DSC 3012 merely browses images, even if a target image file is deleted, the DSC 3012 fails to acquire that image data when it requests to acquire the image file from the storage device. Hence, the DSC 3012 can notify the user that "image is deleted". Hence, when DSC 3012 merely browses images, the update process of the corresponding image data need not be inhibited.

By contrast, when the DSC 3012 acquires a file list from the storage device 3030 to issue a print request to the PD printer 1000, it acquires thumbnail images (index images) of image files from the storage device 3030, and issues a print instruction to the PD printer 1000 after the user determines an image to be printed with reference to these index images. After the print instruction has been issued to the PD printer and a print process has commenced in the PD printer 1000, if the corresponding image file is deleted in the storage device 3030 during that print process, the PD printer 1000 fails to acquire that image file, and consequently fails to print. Therefore, in such case, the update process of the corresponding image data is preferably inhibited for the following reasons.
(1) Although the user confirms a thumbnail image and inputs a print instruction, image file acquisition fails, and a print process cannot be executed.
(2) Since an image file is exchanged between the PD printer 1000 and storage device 3030 during the print process, if an image file acquisition error has occurred, the PD printer 1000 must notify the user of that error.

In general, a camera has a UI function such as a liquid crystal display, which has higher display performance, than a printer. However, when the PD printer 1000 makes error indication, if it has no display, the user must be informed of a message indicating that "no corresponding file is found" by flickering an LED or generating a buzzer tone. Of course, the printer may inform the camera of occurrence of an image file acquisition error by an arbitrary method, and the user may be informed of such message via the UI of the DSC 3012. However, in principle, after the print instruction is issued from the DSC 3012 to the printer, it can be completed by only image file transfer between the printer and storage device 3030. Hence, the DSC 3012 may disconnect connection with the PD printer 1000 and storage device 3030 and may enter a photographing mode or the like after the print process has started. For this reason, the PD printer 1000 may not always be able to use the UI of the DSC 3012 after the print process has started. In consideration of such situation, it is preferable to inhibit the update process of the corresponding image data after the print instruction is issued.

As described above, it is very effective to distinguish whether the DSC 3012 requests the storage device 3030 to send the image file list so as to issue a print instruction to the PD printer 1000 or to merely browse images. Hence, after the file list is requested, the storage device 3030 can determine whether or not stored image files can be updated in accordance with the purpose of the file list request.

Also, the storage device 3030 side may automatically determine whether or not stored image files can be updated, on the basis of whether or not the PD printer 1000 and DSC 3012 are connected while they are ON and are ready to issue a print instruction. That is, if these devices are connected while they are ready to issue a print instruction, the update process of image files in the storage device 3030 may be inhibited; otherwise, the update process of image files in the storage device 3030 may be permitted.

Furthermore, the DSC 3012 may inform the storage device 3030 of whether it acquires an image file list for the print purpose or merely for the browse purpose using its UI, and the storage device 3030 may determine based on such information.

In the arrangement shown in Fig. 10A, determination may be made based on the state of the virtual print server VPS of the storage device 3030. For example, the following method may be used. That is, when a print instruction is issued to the print server VPS of the storage device 3030, the update process of the corresponding image data is inhibited. Upon completion of a print process, update inhibition of that image data is released. Also, whether or not the update process is inhibited may be changed depending on the type of device which is to browse image files.

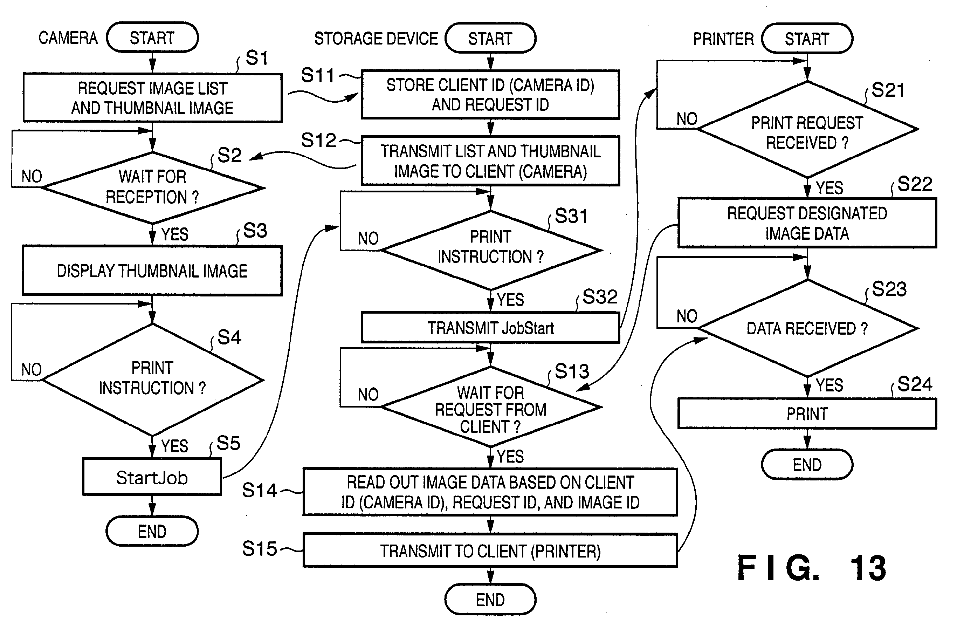

Fig. 13 is a flowchart for explaining the process among the DSC 3012, PD printer 1000, and storage device 3030 as in Fig. 11 above. This process corresponds to the connection pattern shown in Figs. 10A and 10B. Note that the same step numbers denote the same operations as those in Fig. 11.

When the user operates the DSC 3012 to input an index display instruction, the DSC 3012 outputs "GetFileList" and "GetThumb" commands to the storage device 3030 to request a list of image data stored in the storage device 3030 and their thumbnail images in step S1. In response to this request, the storage device 3030 stores the ID of the camera which outputs these commands and the request ID in the RAM 62 in step S11. Note that the camera ID is included in each command, and the request ID is uniquely assigned to a request based on that command. The flow advances to step S12, and the storage device 3030 transmits the file list and thumbnail images to the DSC 3012. The flow then advances from the response reception wait state in step S2 to step S3, and the DSC 3012 displays index images on the display 35 on the basis of the received thumbnail images. When the user selects an image to be printed by operating the operation buttons 34 while observing the index images, and inputs a print start instruction, the flow advances from step S4 to step S5, and a command "StartJob" is issued to transmit the camera ID, request ID, and selected file ID to the PD printer 1000. The process described so far is the same as that in Fig. 11.

Upon reception of the print request in step S31, the flow advances to step S32, and the storage device 3030 issues "StartJob" to the PD printer 1000 on the basis of "StartJob" from the DSC 3012. The processes in steps S31 and 32 correspond to those of the virtual print server and virtual print client in the aforementioned storage device 3030.

The PD printer 1000 receives that print request in step S21, and the flow advances to step S22 as in Fig. 11 above. In step S22, the PD printer 1000 requests the storage device 3030 to send image data corresponding to the request ID designated by "StartJob" and file ID ("GetFile"), and waits for reception of image data in step S23. In response to this request, the flow advances from step S13 to step S14, and the storage device 3030 searches for image data requested by the printer 1000 on the basis of the camera ID, request ID, and file ID so as to read out that image data from the disk 65. The flow advances to step S15, and the storage device 3030 transmits the readout image data to the PD printer 1000. The flow then advances from step S23 to step S24, and the PD printer 1000 receives and decodes that image data to render it to print data, thus executing a print process.

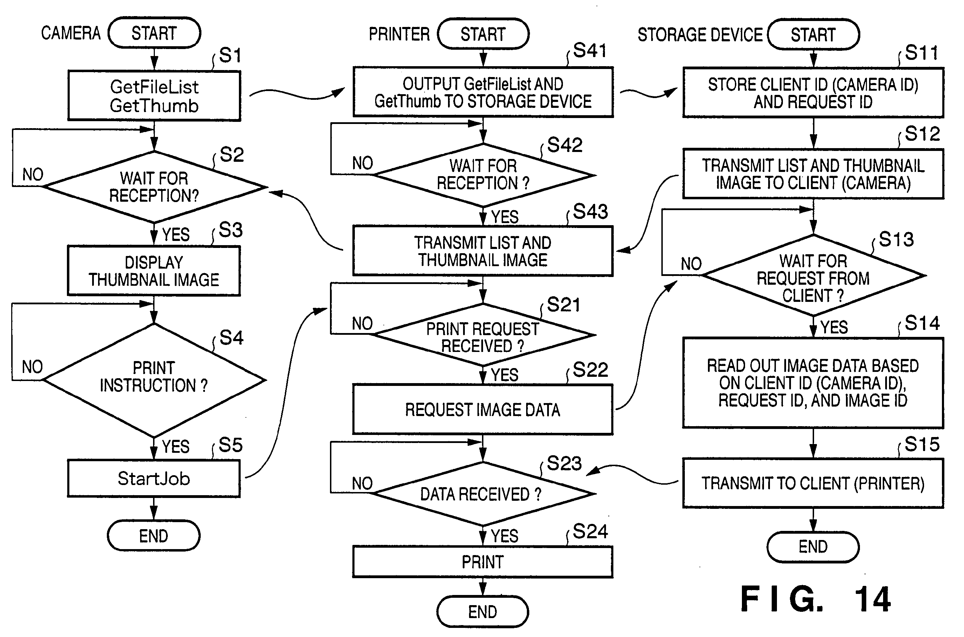

Furthermore, Fig. 14 is a flowchart for explaining the processes among the DSC 3012, PD printer 1000, and storage device 3030 in the case of Fig. 9A above. Note that the same step numbers denote the same operations as those in Fig. 11.

In this case, the operation of the DSC 3012 is basically the same as that in Figs. 11 and 13 above. Since the PD printer 1000 serves as a virtual storage server and virtual storage client, only the process (steps S41 to S43) of the PD printer 1000 for them is different from the aforementioned flowchart.

That is, upon reception of "GetFileList" and "GetThumb" transmitted from the DSC 3012 in step S41, the printer apparatus 1000 outputs these commands to the storage device 3030 to request it to output an image file list and thumbnail images. Upon reception of a response from the storage device 3030 in response to these commands, the flow advances from step S42 to step S43, and the printer apparatus 1000 transmits the received file list and thumbnail images (including the request ID) to the DSC 3012. After that, since the process for prompting the user to select an image to be printed and to input a print instruction on the DSC 3012 is the same as that in the flowchart of Fig. 11, a description thereof will be omitted.

### [Second Embodiment]

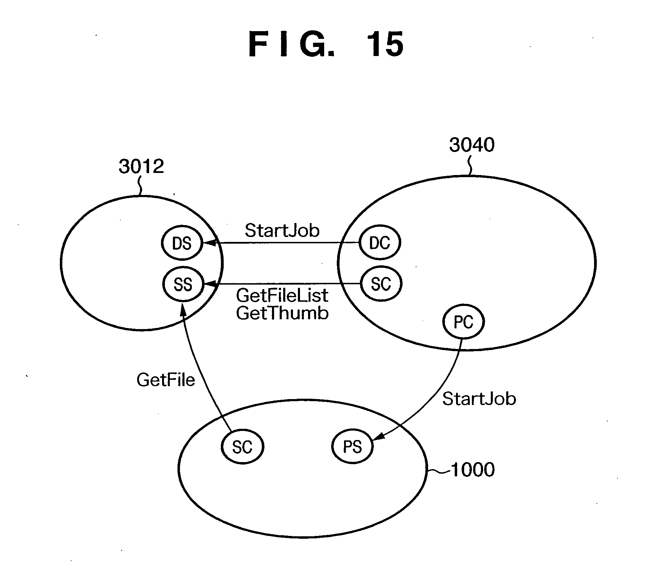

Fig. 15 depicts a view showing an example wherein the PD printer apparatus 1000, DSC 3012, and a display (e.g., a television receiver) 3040 are connected via USB interfaces in the second embodiment of the present invention. Note that the respective devices are connected to each other using two USB interfaces per device in the example of Fig. 15. Also, in Fig. 15, "PS" indicates a print server; "PC", a print client; "SC", a storage client; "SS", a storage server; "DS", a display server; and "DC", a display client. The example of Fig. 15 shows a case wherein the user operates the display 3040 to designate image data stored in the DSC 3012 and to display it on the display 3040, and makes the PD printer 1000 print the designated image data.

In this case, the display 3040 outputs "GetFileList" and "GetThumb" commands to the DSC 3012 to request a list of image files stored in the memory card of the DSC 3012 and their thumbnail images. In response to these commands, the image file list and thumbnail images (including the request ID) are sent from the DSC 3012 to the display 3040, and are displayed on the screen. The user selects an image to be displayed from thumbnail images using a UI (e.g., a remote controller or the like) of the display 3040. In this case, the already acquired thumbnail image is displayed in an enlarged scale. Alternatively, when an image is to be displayed with higher image quality, an original file of the image to be displayed may be acquired and displayed using "GetFile".

On the other hand, the DSC 3012 has a liquid crystal display, can provide display information to the user, and provides a display service to external devices. As for display on this liquid crystal display, a display request of a predetermined image can be made by issuing "StartJob" that describes a predetermined file ID from the display 3040 as the display client (e.g., the image currently selected by the user using the UI of the display 3040). In this manner, the user can be informed that the DSC 3012 is operating as a member of the system, and the display operations on the display 3040 and DSC 3012 can be synchronized.

The contents designated by the display request using "StartJob" can include not only an image designated by the predetermined file ID, but also a character string described in a script, a display symbol corresponding to a predetermined code, and the like. (For example, messages "connecting, do not remove cable", "print now in progress", and the like, a symbol indicating occurrence of an error, and the like)

On the other hand, when the user inputs a print instruction to the PD printer 1000 with reference to index images displayed on the screen of the display 3040, a file ID that specifies the image to be printed, and a "StartJob" command" that instructs print start are transmitted from the display 3040 to the PD printer 1000. The PD printer 1000 uses "GetFile" to request the DSC 3012 to send that image data on the basis of the file ID designated by the print instruction and the request ID. In response to this request, the DSC 3012 transmits the designated image data to the PD printer 1000, which prints that image data.

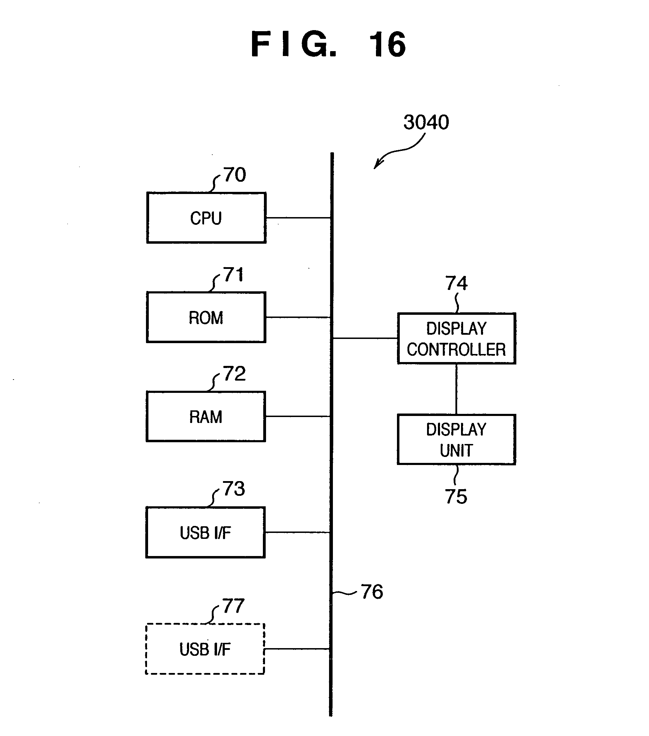

Fig. 16 is a block diagram for explaining the arrangement of the display 3040 according to the second embodiment of the present invention.

Referring to Fig. 16, reference numeral 70 denotes a CPU that controls the overall display 3040; and numeral 71 denotes a ROM that stores the processing sequence (firmware) of the CPU 70 (note that the ROM comprises a rewritable nonvolatile memory (e.g., a flash memory) since the firmware version is updated as needed). Reference numeral 72 denotes a RAM used as a work area of the CPU 70. Reference numeral 73 denotes a USB interface (the slave side of the USB) used to connect the PD printer 1000 of this embodiment. As will be described later, a USB interface 67 may be equipped, and the display may be directly connected to the DSC 3012 via this USB interface. Reference numeral 74 denotes a display controller 3040, which controls image display on a display unit 75.

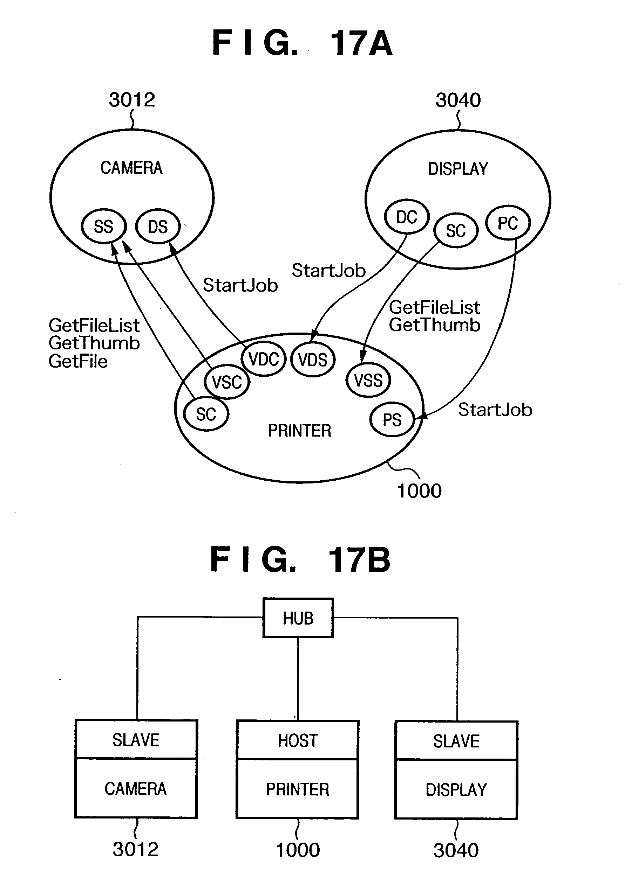

Fig. 17A shows another example when the PD printer 1000, DSC 3012, and display 3040 are connected via USB interfaces in the second embodiment. In the example of Fig. 17B, the PD printer 1000 serves as a USB host, and the DSC 3012 and display 3040 are connected to the printer via a USB hub. In Fig. 17A, "PS" indicates a print server; "PC", a print client; "SC", a storage client; "SS", a storage server; "VSS", a virtual storage server; "VSC", a virtual storage client; "DS", a display server; "DC", a display client; and "VDS", a virtual display server. The example of Fig. 17A shows a case wherein the user operates the display 3040 to designate image data stored in the DSC 3012 and to display it on the display 3040 and the liquid crystal display on the DSC 3012, and or to print that image data by the PD printer 1000.

The display 3040 outputs "GetFileList" and "GetThumb" commands to the DSC 3012 to request a list of image files stored in the DSC 3012 and their thumbnail images. In this case, the PD printer 1000 serves as a virtual storage server. The PD printer 1000 then serves as a virtual storage client, and outputs "GetFileList" and "GetThumb" commands to the DSC 3012 to request it to send a file list of image data stored in the memory card 40 and thumbnail images. When the image file list and thumbnail images (including the request ID) are sent from the DSC 3012 to the PD printer 1000 in response to these commands, the PD printer 1000 transmits that list and thumbnail images to the display 3040. As a result, index images are displayed on the display unit 75 of the display 3040. The user can select an image to be displayed using the UI (e.g., a remote controller or the like) of the display 3040. In this case, the already acquired thumbnail image is displayed in an enlarged scale. Alternatively, when an image is to be displayed with higher image quality, an original file of the image to be displayed may be acquired and displayed by issuing "GetFile" to the DSC 3012 via the PD printer 1000 as in the above commands "GetFileList" and "GetThumb". When a predetermined image is to be displayed on the liquid crystal display of the DSC 3012, the display 3040 outputs a "StartJob" command that describes a predetermined file ID to the PD printer 1000 to request display of an image file stored in the DSC 3012. In this case, the PD printer 1000 serves as a virtual display server. Next, the PD printer 1000 serves as a virtual display client, and outputs a "StartJob" command to the DSC 3012 to request the DSC 3012 to display image data stored in its memory card 40. The DSC 3012 as a display server displays image data stored in its memory card 40 on the liquid crystal display of the DSC 3012.

On the other hand, when the user inputs a print instruction while index images are displayed on the display 3040, "StartJob" is sent from the display 3040 to the PD printer 1000. In response to this command, the PD printer 1000 serves as a storage client, and requests the DSC 3012 to send image data designated by the print instruction together with the request ID ("GetFile"). After the image data designated by the print instruction is acquired in this way, the PD printer 1000 prints an image based on that image data.

Fig. 17B is a diagram for explaining USB connection of the PD printer 1000, DSC 3012, and display 3040 shown in Fig. 17A. In Fig. 17B, the PD printer 1000 is set as a host, and the DSC 3012 and display 3040 are set as slaves.

As a modification of USB connection of the PD printer 1000, DSC 3012, and display 3040 shown in Fig. 17A, the PD printer 1000 may serve as a host in USB connection between the DSC 3012 and PD printer 1000, and the display 3040 may serve as a USB host in USB connection between the PD printer 1000 and display 3040.

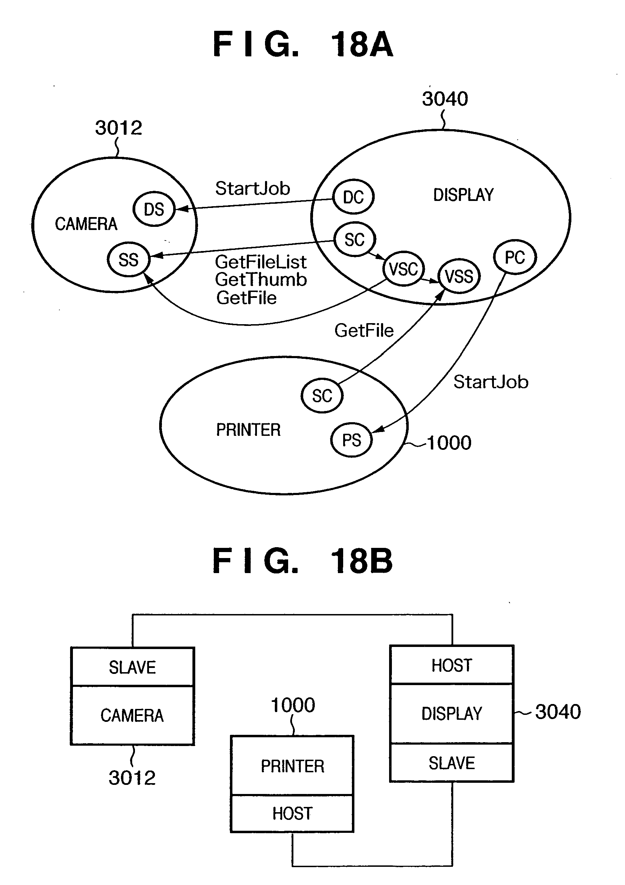

Fig. 18A shows still another example when the PD printer 1000, DSC 3012, and display 3040 are connected via USB interfaces in the second embodiment. In Figs. 18A and 18B, the display 3040 serves as a host in USB connection between the DSC 3012 and display 3040, and the PD printer 1000 serves as a USB host in USB connection between the PD printer 1000 and display 3040, as shown in Fig. 18B. Also, abbreviations such as "PS" and the like in Fig. 18A are the same as those in the above example. The example of Fig. 18A shows a case wherein the user operates the display 3040 to designate image data stored in the DSC 3012 and to display it on the display 3040 and the liquid crystal display of the DSC 3012, or to print that image data by the PD printer 1000.

The display 3040 outputs "GetFileList" and "GetThumb" commands to the DSC 3012 to request a list of image files stored in the memory card 40 of the DSC 3012 and their thumbnail images. In response to these commands, the image file list and thumbnail images (including the request ID) are sent from the DSC 3012 to the display 3040, and the user selects an image to be displayed. In this case, the already acquired thumbnail image is displayed in an enlarged scale. Alternatively, when an image is to be displayed with higher image quality, an original file of the image to be displayed may be acquired and displayed by issuing "GetFile" to the DSC 3012 as in the above commands "GetFileList" and "GetThumb".

When a predetermined image is to be displayed on the liquid crystal display on the DSC 3012, the display 3040 outputs a "StartJob" command that describes a predetermined file ID to the DSC 3012 to request to display image data stored in its memory card 40. The DSC 3012 serving as a display server displays image data stored in its memory card 40 on the liquid crystal display of the DSC 3012.

When a print process is to be made, a thumbnail image is sent from the DSC 3012 to the display 3040, and the user selects an image to be printed. Then, a "StartJob" command is issued from the display 3040 to the PD printer 1000. In this manner, the PD printer 1000 serving as a storage client requests the display 3040 as a virtual storage server to send image data. In response to this request, the display 3040 serving as a storage client requests the DSC 3012 as the server to send that selected image data together with the request ID ("GetFile"). As a result, the DSC 3012 transmits image data to the display 3040, which transmits that image data to the PD printer 1000, thus executing a print process of the image.

Note that the second embodiment can exchange, print, and display image data by the same processes as those shown in the flowcharts of Figs. 11 to 14 according to the first embodiment above, and a description thereof will be omitted since it is basically the same as that of the processes shown in the aforementioned flowcharts except that only a display process is added to the above description.

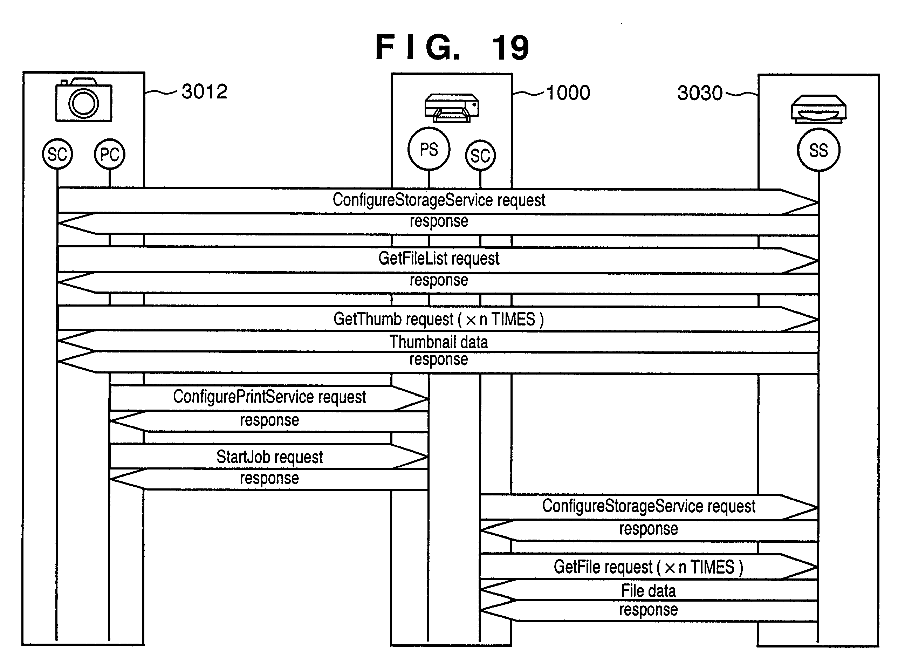

Fig. 19 depicts a view for explaining command exchange among the DSC 3012, PD printer 1000, and storage device 3030 in the pattern shown in Fig. 8, and the server and client abbreviations in storage and print are the same as those in Fig. 8.

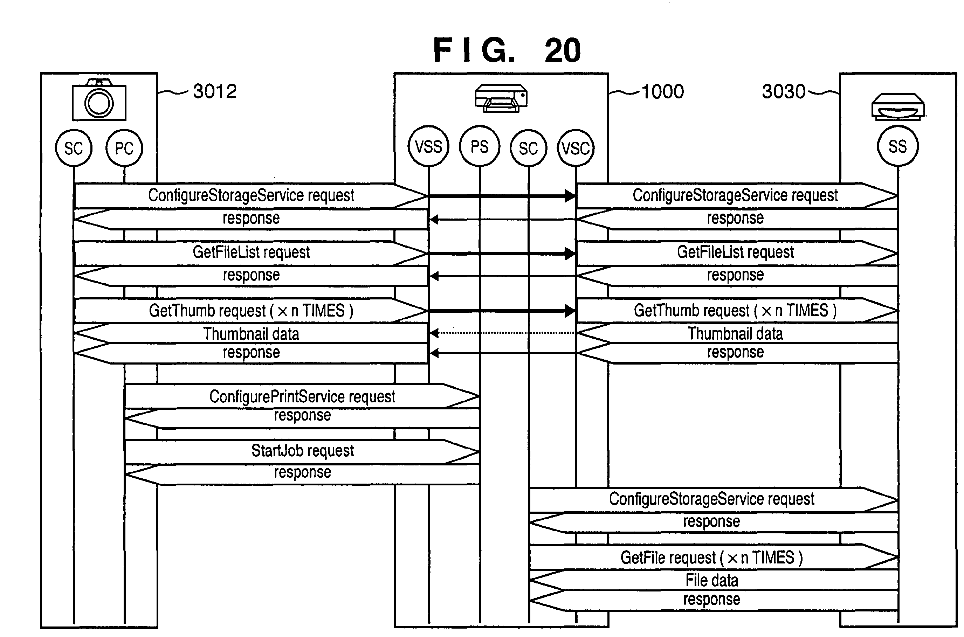

Fig. 20 depicts a view for explaining command exchange among the DSC 3012, PD printer 1000, and storage device 3030 in the pattern shown in Figs. 9A and 9B, and the server and client abbreviations in storage and print are the same as those in Figs. 9A and **9B.**

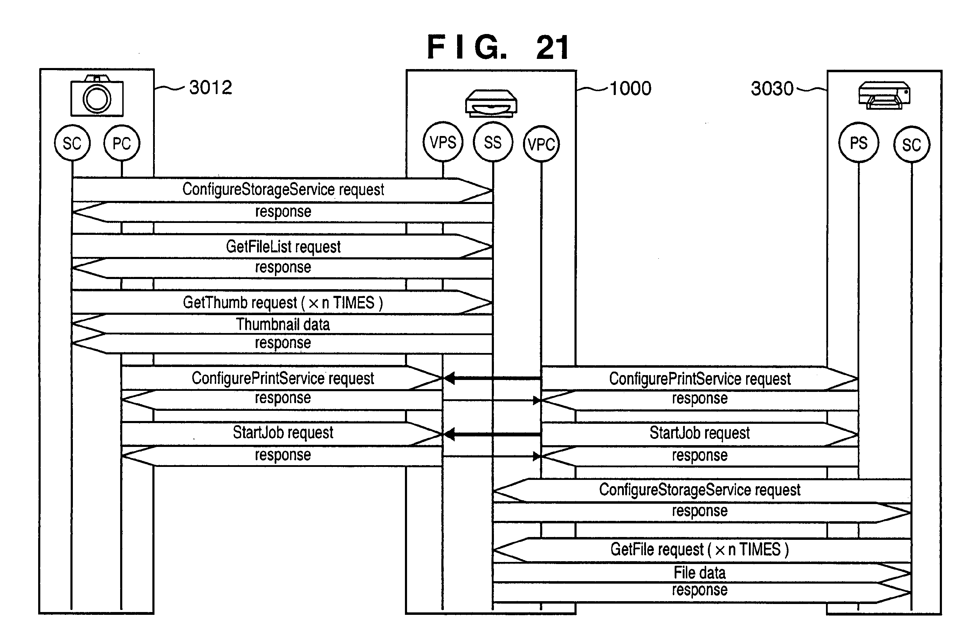

Furthermore, Fig. 21 is a view for explaining command exchange among the DSC 3012, PD printer 1000, and storage device 3030 in the pattern shown in Figs. 10A and 10B, and the server and client abbreviations in storage and print are the same as those in Figs. 10A and 10B.

Command described in Figs. 19 to 21 will be explained below.

### (A) [ConfigurePrintService:]

This command is used when a print client (PC) requests a print server (PS) to provide a print service.

### [Request Script:]

This script (Script) is transmitted from the print client (PC) to the print server (PS).
<Input>
<ConfigurePrintService>
<vendorName>PCVN</vendorName>
<productName>PCPN</productName>
</ConfigurePrintService>
</Input>

Note that "Input" is a tag indicating Request, and "vendorName" describes the vendor name of the print client device. "productName" describes the device name of the print client device.

### [Response Script:]

This Script is returned from the print server (PS) to the print client (PC).
<Output>
<ConfigurePrintService>
<printServiceAvailable>True<printServiceAvailable>
<vendorName>PSVN</vendorName>
<productName>PSPN</productName>
</ConfigurePrintService>
</Output>

Note that "Output" is a tag indicating Response, and "printServiceAvailable" describes True if a print service is available or False if no print service is available. "vendorName" describes the vendor name of the print server device. "productName" describes the device name of the print server device.

### (B) [ConfigureStorageService:]

This command is used when a storage client (SC) requests a storage server (SS) to provide a storage service.

### [Request Script:]

This script is transmitted from the storage client (SC) to the storage server (SS).
<Input>
<ConfigureStorageService>
<vendorName>SCVN</vendorName>
<productName>SCPN</productName>
</ConfigureStorageService>
</Input>

Note that "Input" is a tag indicating Request, and "vendorName" describes the vendor name of the storage client device. "productName" describes the device name of the storage client device.

### [Response Script:]

This script is returned from the storage server (SS) to the storage client (SC).
<Output>
<ConfigureStorageService>
<StorageServiceAvailable>True<StorageServiceAvailable>
<vendorName>SSVN</vendorName>
<productName>SSPN</productName>
</ConfigureStorageService>
</Output>

Note that "Output" is a tag indicating Response, and "StorageServiceAvailable" describes True if a storage service is available or False if no storage service is available. "vendorName" describes the vendor name of the storage server device. "productName" describes the device name of the storage server device.

### (C) GetFileList: (Storage Service Operation)

This command is used when the storage client (SC) requests the storage server (SS) to send the ID list of all files managed by the storage server.

### [Request Script:]

This Script is transmitted from the storage client (SC) to the storage server (SS).
<Input>
<GetFileList/>
</Input>

Note that "Input" is a tag indicating Request.

### [Response Script:]

This Script is returned from the storage server (SS) to the storage client (SC).
<Output>
<GetFileList>
<fileIDs>0000 0001 0002 0003</fileIDs>
<requestID>0000</requestID>
</GetFileList>
</Output>

Note that "Output" is a tag indicating Response, and "fileIDs" lists file IDs of all files managed by the storage server. In this example, a total of four files are available, and are respectively assigned file IDs "0000", "0001", "0002", and "0003".

"requestID" is an ID assigned to maintain consistency between the file list and file IDs, and is described as "request ID" in the above embodiments.

### (D) GetThumb: (Storage Service Operation)

This command is used when the storage client (SC) requests the storage server (SS) to send thumbnail image data corresponding to a file which is designated by the file ID and is managed by the storage server (SS).

### [Request Script:]

This Script is transmitted from the storage client (SC) to the storage server (SS).
<Input>
<GetThumb>
<requestID>0000</requestID>
<fileID>0001<fileID>
</GetThumb>
</Input>

Note that "Input" is a tag indicating Request, and "fileID" is the file ID of a source file of thumbnail image data requested by the storage client.

"requestID" is an ID assigned to maintain consistency between the file list and file IDs, and is described as "request ID" in the above embodiments.

### [Response Script:]

This Script is returned from the storage server (SS) to the storage client (SC).
<Output>
<GetThumb/>
</Output>

Note that "Output" is a tag indicating Response.

### (E) GetFile: (Storage Service Operation)

This command is used when the storage client (SC) requests the storage server (SS) to send file data which is designated by the file ID and is managed by the storage server (SS).

### [Request Script:]

This Script is transmitted from the storage client (SC) to the storage server (SS).
<Input>
<GetFile>
<requestID>0000</requestID>
<fileID>0001<fileID>
</GetFile>
</Input>

Note that "Input" is a tag indicating Request, and "fileID" is the file ID of file data requested by the storage client.

"requestID" is an ID assigned to maintain consistency between the file list and file IDs, and is described as "request ID" in the above embodiments.

### [Response Script:]

This Script is returned from the storage server (SS) to the storage client (SC).
<Output>
<GetFile/>
</Output>

Note that "Output" is a tag indicating Response.

### (F) StartJob: (Print Service Operation)

This command is used when the print client (PC) requests the print server (PS) to print file data which is designated by the file ID and is managed by the storage server on a print sheet. In this print method, items which are not particularly designated by the print client are arbitrarily set by the print server.

### [Request Script:]

This script (Script) is transmitted from the print client (PC) to the print server (PS).
<Input>
<StartJob>
<requestID>0000</requestID>
<fileIDs>0001 0002<fileIDs>
</Input>

Note that "Input" is a tag indicating Request, and "fileIDs" are the file IDs of files designated by the print request from the print client. In this example, the request is issued to print two different files with file IDs "0001" and "0002".

"requestID" is an ID assigned to maintain consistency between the file list and file IDs, and is described as "request ID" in the above embodiments.

### [Response Script:]

This Script is returned from the print server (PS) to the print client (PC).
<Output>
<StartJob/>
<Output>

Note that "Output" is a tag indicating Response.

In the above embodiments, the USB is used as a versatile interface used to connect devices. For example, the present invention is effective even when Bluetooth described in Fig. 7, wireless interfaces such as IEEE802.11-based interfaces, infrared ray communication, and the like, and other wired interfaces such as 10/100Base-T, IEEE1394, and the like are used. In this case, either the arrangement shown in Fig. 8 or Fig. 9A may be adopted.

Especially, in case of a IEEE802.11-based wireless interface or network connection using 10/100Base-T or the like, "requestID" can have not only a function of maintaining consistency between the file list and file IDs but also an authentication function. That is, in Fig. 8, the storage client (SC) of the camera 3012 acquires an authentic right of access to the storage server (SS) of the external storage device 3030 by an existing method, and acquires the "file IDs" of images saved in the storage server (SS) and "requestID". The print client (PC) of the camera 3012 notifies the print server (PS) of the external printer 1000 of the "file ID" of the image to be printed and "requestID". Upon reception of this print request, the print server (PS) of the printer 1000 requests the storage server (SS) of the external storage device 3030 using the "file ID" of the image to be printed and "requestID" to send image data. The storage server of the storage device 3030 checks if "requestID" is authentic "requestID" which was issued previously by itself to the storage client having an authentic right of access. If "requestID" is authentic, the storage server permits an image transfer request; otherwise, it denies image transfer. In this manner, transfer availability can be checked for image transfer requests from unspecified many storage clients present on the network. With this method, even when the authentication method executed between the storage client (SC) of the camera 3012 and the storage server (SS) of the storage device 3030 is updated to the latest method, the storage client (SC) of the printer 1000 need not be updated.

Note that information that designates a file to be transmitted and the identification ID of a list are used together upon issuing an image output request and print request. Hence, even when the contents of the storage device have been updated, occurrence of an error process can be prevented using the contents of a list received by an arbitrary device. This function is very effective when three or more devices exchange file designation information, but it can be applied to exchange between two devices. This is because another user may forcibly update information of a storage device in one device after a list is received.

### [Other Embodiments]

Note that the present invention may be applied to either a system constituted by a plurality of devices (e.g., a host computer, interface device, reader, printer, and the like), or an apparatus consisting of a single equipment (e.g., a copying machine, facsimile apparatus, or the like).

The objects of the present invention are also achieved by supplying a storage medium (or recording medium), which records a program code of a software program that can implement the functions of the above-mentioned embodiments (the process executed on the camera side or by the storage device, various print processes executed on the printer side) to the system or apparatus, and reading out and executing the program code stored in the storage medium by a computer (or a CPU or MPU) of the system or apparatus. In this case, the program code itself read out from the storage medium implements the functions of the above-mentioned embodiments, and the storage medium which stores the program code constitutes the present invention. The functions of the above-mentioned embodiments may be implemented not only by executing the readout program code by the computer but also by some or all of actual processing operations executed by an operating system (OS) running on the computer on the basis of an instruction of the program code.

Furthermore, the functions of the above-mentioned embodiments may be implemented by some or all of actual processing operations executed by a CPU or the like arranged in a function extension card or a function extension unit, which is inserted in or connected to the computer, after the program code read out from the storage medium is written in a memory of the extension card or unit.

As described above, according to this embodiment, devices connected via the USB can exchange data.

Correspondence between a file ID requested based on a file list and image data corresponding to that file ID in practice can be reliably determined.

Since USB-connected devices exchange data using a script, data can be transferred in arbitrary directions between USB-connected host and slave devices to exchange data.

The present invention is not limited to the aforementioned embodiments, and various changes and modifications may be made within the spirit and scope of the invention. Hence, the technical scope of the present invention is specified on the basis of the appended claims.

## Claims

1. An image transfer system which connects at least three devices as a server and client via a versatile interface, and outputs an image by transferring data among the devices, wherein
a first device serves as a client of second and third devices, and transmits a list request of image files stored in the second device to the second device,
the second device transmits list data of the image files to the first device together with an identification ID of the list request in response to the list request, and
the third device sends a request of image data of an image to be output which is designated by the first device, to the second device together with the identification ID, and acquires the image data from the second device.

2. The system according to claim 1, wherein the first device is a digital camera.

3. The system according to claim 1, wherein the second device is a storage device.

4. The system according to claim 1, wherein the third device is a printer device or a display device.

5. The system according to claim 1, wherein the second device further outputs the image.

6. The system according to claim 1, wherein the versatile interface includes any one of USB, Bluetooth, IEEE802.11-based wireless communications, 10/100Base-T, and IEEE1394.

7. An image transfer system which connects at least three devices as a server and client via a versatile interface, and outputs an image by transferring data among the devices, wherein
first and third devices, and second and the third devices are respectively connected via the versatile interface, and the first and second devices serve as clients of the third device,
the first device transmits a list request of image files stored in the second device to the third device,
the third device transmits the list request to the second device together with an identification ID of the list request in response to the list request,
the second device transmits list data of the image files to the third device in response to the list request, and
the third device transmits the list data from the second device to the first device, sends a request of image data of an image to be output which is designated by the first device according to the list data to the second device, and acquires and outputs the image data from the second device.

8. The system according to claim 7, wherein the first device is a digital camera.

9. The system according to claim 7, wherein the second device is a storage device.

10. The system according to claim 7, wherein the third device is a printer device or a display device.

11. An image output system which connects at least three devices as a server and client via a versatile interface, and outputs an image by transferring data among the devices, wherein
first and second devices, and the second device and a third device are respectively connected via the versatile interface, the first device serves as a client of the second device, and the second device serves as a client of the third device,
the first device transmits a list request of image files stored in the second device to the second device,
the second device transmits the list request to the first device together with an identification ID of the list request in response to the list request,
the first device transmits an output request of an image to be output designated based on the list data to the second device together with the identification ID, and
the third device transmits a request of image data of the image to be output designated by the second device, to the second device together with the identification ID, and acquires and outputs the image data from the second device.

12. The system according to claim 11, wherein the first device is a digital camera.

13. The system according to claim 11, wherein the second device is a storage device.

14. The system according to claim 11, wherein the third device is a printer device or a display device.

15. An image transfer method which connects at least three devices as a server and client via a versatile interface, and outputs an image by transferring data among the devices, comprising:
a step of transmitting, from a first device, a list request of image files stored in a second device to the second device, the first device serving as a client of the second device and a third device;
a step of transmitting, from the second device, list data of the image files to the first device together with an identification ID of the list request in response to the list request; and
a step of transmitting, from the third device, a request of image data of an image to be output which is designated by the first device, to the second device together with the identification ID, and acquiring the image data from the second device.

16. An image output method which connects at least three devices as a server and client via a versatile interface, and outputs an image by transferring data among the devices, wherein first and third devices, and the second and third devices being respectively connected via the versatile interface, and the first and second devices serving as clients of the third device, comprising:
a step of transmitting, from the first device, a list request of image files stored in the second device to the third device;
a step of transmitting, from the third device, the list request to the second device together with an identification ID of the list request in response to the list request;
a step of transmitting, from the second device, list data of the image files to the third device in response to the list request; and
a step of transmitting, from the third device, the list data from the second device to the first device, transmitting, to the second device, a request of image data of an image to be output which is designated by the first device according to the list data, and acquiring and outputting the image data from the second device.

17. An image output method which connects at least three devices as a server and client via a versatile interface, and outputs an image by transferring data among the devices, wherein first and second devices, and the second device and a third device being respectively connected via the versatile interface, the first device serving as a client of the second device, and the second device serving as a client of the third device, comprising:
a step of transmitting, from the first device, a list request of image files stored in the second device to the second device;
a step of transmitting, from the second device, the list request to the first device together with an identification ID of the list request in response to the list request;
a step of transmitting, from the first device, an output request of an image to be output designated based on the list data, to the second device together with the identification ID; and
a step of transmitting, from the third device, a request of image data of the image to be output designated by the second device, to the second device together with the identification ID, and acquiring and outputting the image data from the second device.

18. A printing device which is connected to an image sensing device and storage device via a versatile interface, and prints an image in response to a print instruction from the image sensing device, comprising:
reception means for receiving list data of image files as a print request from the image sensing device;
request means for transmitting the list data of the image file to the storage device to request the storage device to send image data; and
print means for printing an image on the basis of the image data transmitted from the storage device in response to the request from said request means.

19. A printing device which is connected to an image sensing device and storage device via a versatile interface, and prints an image in response to a print instruction from the image sensing device, comprising:
transmission means for transmitting a request of a list of image files stored in the storage device to the storage device upon reception of the request from the image sensing device;
means for transmitting, to the image sensing device, a list of the image files to the image sensing device transmitted from the storage device in response to the request transmitted by said transmission means;
request means for requesting the storage device to output image data of an image file included in a print request, which is generated based on the list of the image files by the image sensing device, upon reception of the print request; and
print means for printing an image on the basis of the image data sent back from the storage device in response to the request of said request means.

20. An image sensing device which is connected to a printing device and storage device via a versatile interface, and outputs a print instruction to the printing device to make the printing device print an image, comprising:
request means for transmitting a request of list data of image files to the storage device;
selection instruction means for prompting a user to select an image to be printed on the basis of the list data transmitted from the storage device in response to the request of said request means; and
print request means for transmitting a print request of the image selected by said selection instruction means to the printing device.

21. An image sensing device which is connected to a printing device and storage device via a versatile interface, and outputs a print instruction to the printing device to make the printing device print an image, comprising:
request means for transmitting a request of list data of image files stored in the storage means to the printing device;
selection instruction means for prompting a user to select an image to be printed on the basis of the list data transmitted from the printing device in response to the request of said request means; and
print request means for transmitting a print request of the image selected by said selection instruction means to the printing device,
wherein the printing device acquires image data of the image selected by said selection instruction means from the storage device, and prints an image of the image data.

22. A communication device which communicates with at least one device via a versatile interface, comprising:
list request reception means for receiving a list request that requests a list of files stored in an externally connected or internal storage device from a first device;
file transmission request reception means for transmitting the list data and an identification ID of the list data to the first device in response to the list request, and receiving a file transmission request appended with the identification ID from a second device; and
transmission means for transmitting a file specified based on the identification ID appended to the file transmission request from the storage device to the second device.

23. The device according to claim 22, wherein it is determined whether or not the identification ID is valid, if the identification ID is valid, a corresponding file is transmitted to the second device on the basis of the identification ID, and if the identification ID is not valid, a process different from the process for the valid identification ID is executed.

24. The device according to claim 23, wherein a method of determining whether or not the identification ID is based on whether or not the identification ID matches an identification ID transmitted in response to the list request.

25. The device according to claim 23, wherein the process different from the process for the valid identification ID is to deny transmission of a file.

26. The device according to claim 22, wherein the versatile interface includes any one of USB, Bluetooth, IEEE802.11-based wireless communications, 10/100Base-T, and IEEE1394.

27. The device according to claim 22, wherein the second communication device is identical to the first communication device.

28. A communication device which communicates with at least one external device via a versatile interface, comprising:
acquisition means for acquiring list data of files managed by the external device and an identification ID corresponding to the list data;
request generation means for generating information that designates a file to be transmitted and a request based on the identification ID so as to instruct to transmit the file included in the list data; and
output means for externally outputting the request generated by said request generation means.

29. The device according to claim 28, wherein the versatile interface includes any one of USB, Bluetooth, IEEE802.11-based wireless communications, 10/100Base-T, and IEEE1394.

30. The device according to claim 28, wherein said output means transmits the request to an external device different from the external device.

31. A method of controlling a communication device which communicates with at least one device via a versatile interface, comprising:
a list request reception step of receiving a list request that requests a list of files stored in an externally connected or internal storage device from a first device;
a file transmission request reception step of transmitting the list data and an identification ID of the list data to the first device in response to the list request, and receiving a file transmission request appended with the identification ID from a second device; and
a transmission step of transmitting a file specified based on the identification ID appended to the file transmission request from the storage device to the second device.

32. A method of controlling a communication device which communicates with at least one external device via a versatile interface, comprising:
an acquisition step of acquiring list data of files managed by the external device and an identification ID corresponding to the list data;
a request generation step of generating information that designates a file to be transmitted and a request based on the identification ID so as to instruct to transmit the file included in the list data; and
an output step of externally outputting the request generated in the request generation step.

33. A computer readable storage medium storing a program that implements a control method of claim 31.

34. A computer readable storage medium storing a program that implements a control method of claim 32.
